# EUROPÄISCHE PATENTSCHRIFT

(11) **EP 3 434 108 B1**
(45) Veröffentlichungstag und Bekanntmachung des Hinweises auf die Patenterteilung: **13.11.2019**
(21) Anmeldenummer: 18185988.5
(22) Anmeldetag: 27.07.2018
(51) Int. Cl.: A23C 19/032

(54) **LIPASEN AUS BASIDIOMYCETEN FÜR DEN EINSATZ IN DER KÄSEREI**
LIPASES FROM BASIDIOMYCETES FOR USE IN CHEESE DAIRY
LIPASES À PARTIR DE BASIDIOMYCÈTES POUR L'UTILISATION DANS LA FROMAGERIE

(30) Priorität: 28.07.2017 EP 17183833
(43) Veröffentlichungstag der Anmeldung: 30.01.2019
(73) Patentinhaber: optiferm GmbH, 87466 Oy-Mittelberg (DE)
(72) Erfinder: Zorn, Holger, 35435 Wettenberg (DE); Kreuter, Nadja, 35428 Langgöns (DE); Weichhard, Edgar, 87466 Oy-Mittelberg (DE); Fleischner, Wilhelm, 91732 Merkendorf (DE); Manhard, Julia, 87629 Füssen (DE)
(74) Vertreter: Moré, Solveig Helga

(56) Entgegenhaltungen:
- MASANOBU KAWAI ET AL: "Studies on Milk Clotting Enzymes Produced by Basidiomycetes : Part I. Screening Tests of Basidiomycetes for the Production of Milk Clotting Enzymes Part II. Some Properties of Basidiomycete Milk Clotting Enzymes", AGRICULTURAL AND BIOLOGICAL CHEMISTRY, Bd. 34, Nr. 2, 1. Februar 1970 (1970-02-01), Seiten 159-169, XP055401761, JP ISSN: 0002-1369, DOI: 10.1080/00021369.1970.10859605
- DATABASE WPI Week 201713 Thomson Scientific, London, GB; AN 2017-091917 XP002773253, & JP 2017 023080 A (UNIV YAMANASHI) 2. Februar 2017 (2017-02-02)
- DATABASE WPI Week 200682 Thomson Scientific, London, GB; AN 2006-810830 XP002773254, & KR 2006 0086142 A (KNU IND COOP FOUND) 31. Juli 2006 (2006-07-31)

### SEQUENCE LISTING

<110> Optiferm GmbH
<120> LIPASEN AUS BASIDIOMYCTEN FÜR DEN EINSATZ IN DER KÄSEREI
<130> OPT18343EP
<160> 17
<170> BiSSAP 1.3.6
<210> 1
   <211> 725
   <212> PRT
   <213> Flammulina velutipes
<400> 1
   Met Thr Arg Ala Pro Leu Pro His Leu Ser His His Gly Pro Thr Ser
   1               5                   10                  15
   Glu Asp Cys Leu Thr Ile Asn Val Val Lys Pro Ala Asn Val Glu Glu
               20                  25                  30
   Gly Ala Gln Leu Pro Val Val Ala Val Ser Ser Phe Glu Val Gly Gly
           35                  40                  45
   Thr Ser Glu Tyr Asn Gly Thr Ser Ile Val Ser Arg Ser Leu Glu Leu
       50                  55                  60
   Gln Glu Pro Val Ile Tyr Val Ser Phe Asn Tyr Arg Leu Asn Gly Phe
   65                  70                  75                  80
   Gly Phe Leu Ala Ser Lys Glu Val Lys Glu Ala Gly Val Gly Asn Leu
                   85                  90                  95
   Gly Leu Gln Asp Gln Arg Leu Ala Leu Lys Trp Ile Gln Lys Tyr Val
               100                 105                 110
   Gly Ala Phe Gly Gly Asp Pro Thr Lys Val Thr Ile Trp Gly Glu Ser
           115                 120                 125
   Ala Gly Ala Glu Ala Val Val Tyr His Met Val Ser Asn Asp Gly Asn
       130                 135                 140
   Thr Glu Gly Leu Tyr Arg Ala Ala Phe Ala Gln Ser Gly Ser Val Gly
   145                 150                 155                 160
   Ser Tyr Gly Gly Leu Glu Asn Gly Gln Asp Ala Tyr Asp Gly Ile Val
                   165                 170                 175
   Asn Lys Thr Gly Cys Ser Asn Ala Ser Asp Thr Leu Ala Cys Leu Arg
               180                 185                 190
   Thr Ala Asp Phe Asp Thr Leu Lys Ala Ala Ile Asp Glu Ala Glu Phe
           195                 200                 205
   Val Trp Thr Pro Arg Phe Asp Gly Ala Leu Phe Ser Asp Leu Pro Gln
       210                 215                 220
   Asn Leu Ile Leu Gln Gly Lys Val Ala Asp Val Pro Leu Ile Thr Gly
   225                 230                 235                 240
   Asn Cys Gly Asp Glu Gly Thr Leu Tyr Ser Ile Ser Tyr Asn Ile Ser
                   245                 250                 255
   Thr Asp Ala Glu Phe Lys Thr Phe Leu Gln Thr Arg Trp Leu Pro Thr
               260                 265                 270
   Ala Ser Asp Ala Glu Ile Asp Arg Leu Leu Ala Leu Tyr Pro Ser Asp
           275                 280                 285
   Pro Ser Gln Gly Ser Pro Phe Asp Thr Gly Ser Asp Asn Ala Ile Thr
       290                 295                 300
   Pro Gln Tyr Lys Arg Ser Ala Ala Leu Leu Gly Asp Leu Leu Phe Gln
   305                 310                 315                 320
   Thr Ser Arg Arg Tyr Leu Ile Asn Glu Leu Ser Gly Lys Gln Asp Ile
                   325                 330                 335
   Tyr Thr Tyr Ile His Asn Arg Gln Arg Arg Leu Pro Val Leu Gly Ser
               340                 345                 350
   Phe His Ala Ser Asp Leu Val Asn Val Tyr Gly Gly Gly Asp Met Ser
   355 360 365
   Asp Tyr Leu Ile Arg Phe Val Ala Thr Leu Asp Pro Asn Gly Asn Thr
   370 375 380
   Gly Ile Ser Trp Pro Lys Trp Thr Ser Glu Ala Pro Asn Met Leu Ala
   385 390 395 400
   Phe Ser Asp Asp Glu Ala Val Pro Leu Ser Leu Thr Glu Asp Thr Tyr
   405 410 415
   Arg Lys Glu Ala Met Ala Ala Ser Gly Met Ile Gln Ser Cys Tyr Ile
   420 425 430
   Tyr Val Trp Gln Arg Gln Ile Lys Thr Leu Leu Glu Ala Tyr Val Tyr
   435 440 445
   Gly Arg Tyr Pro Asp Arg Ala Ser Glu Lys Val Thr Ala Thr Arg Thr
   450 455 460
   Leu Asn Thr Val Ser Ile Thr Val Thr Ala Lys Gly Lys Thr Gly Arg
   465 470 475 480
   Phe Ser Ala Thr Leu Ala Leu Pro Ser Arg Ala Ser Lys Asn Lys Pro
   485 490 495
   Val Pro Ala Val Ile Val Ile Gly Phe Ala Asp Ser Thr Phe Leu Asn
   500 505 510
   Asn Gly Ile Ala Gln Ala Thr Phe Asp Ala Asn Ser Val Ala Ala Asp
   515 520 525
   Ser Thr Ser Lys Thr Gly Ala Phe His Asn Ile Tyr Ser Glu Asp Ile
   530 535 540
   Gly Ser Leu Leu Ala Trp Gly Trp Gly Ser His Arg Val Leu Asp Ala
   545 550 555 560
   Leu Glu Leu Val Ala Pro Glu Ile Asp Ser Thr Arg Val Gly Val Met
   565 570 575
   Gly Cys Ser Arg Tyr Gly Lys Gly Ala Leu Ala Ala Gly Ile Phe Asp
   580 585 590
   Asp Arg Leu Val Glu Thr Lys Gly Leu Ala Pro Trp Ser Arg Leu Phe
   595 600 605
   His Gly Gly Gln Lys Arg Ala Cys Lys Thr Thr Tyr Arg Met Arg Ile
   610 615 620
   Val Phe Pro Trp Met Pro Ile Ser Leu Pro Leu Leu Leu Leu Arg Ala
   625 630 635 640
   Leu Pro Phe Gly Ile Lys Met Asn Pro Glu Gly Val Ala Gly Val Thr
   645 650 655
   Phe Pro Ala Thr Gln Met Val Tyr Lys Phe Leu Gly Ala Glu Glu Asn
   660 665 670
   Val Gly Val Ala Leu Arg Asn Ser Gly His Cys Asp Pro Ser Gly Thr
   675 680 685
   Asn Asn Val Leu Asp Phe Val Lys Ser Val Leu Leu Gly Ser Gln Arg
   690 695 700
   Thr Arg Asn Tyr Thr Thr Ile Ser Pro Tyr Gln Ala His Pro Glu Ala
   705 710 715 720
   Tyr Pro Trp Ala Ile
   725
<210> 2
   <211> 341
   <212> PRT
   <213> Flammulina velutipes
<400> 2
   Leu Asn Gly Phe Gly Phe Leu Ala Ser Lys Glu Val Lys Glu Ala Gly
   1               5                   10                  15
   Val Gly Asn Leu Gly Leu Gln Asp Gln Arg Leu Ala Leu Lys Trp Ile
               20                  25                  30
   Gln Lys Tyr Val Gly Ala Phe Gly Gly Asp Pro Thr Lys Val Thr Ile
           35                  40                  45
   Trp Gly Glu Ser Ala Gly Ala Glu Ala Val Val Tyr His Met Val Ser
       50                  55                  60
   Asn Asp Gly Asn Thr Glu Gly Leu Tyr Arg Ala Ala Phe Ala Gln Ser
   65                  70                  75                  80
   Gly Ser Val Gly Ser Tyr Gly Gly Leu Glu Asn Gly Gln Asp Ala Tyr
                   85                  90                  95
   Asp Gly Ile Val Asn Lys Thr Gly Cys Ser Asn Ala Ser Asp Thr Leu
               100                 105                 110
   Ala Cys Leu Arg Thr Ala Asp Phe Asp Thr Leu Lys Ala Ala Ile Asp
           115                 120                 125
   Glu Ala Glu Phe Val Trp Thr Pro Arg Phe Asp Gly Ala Leu Phe Ser
       130                 135                 140
   Asp Leu Pro Gln Asn Leu Ile Leu Gln Gly Lys Val Ala Asp Val Pro
   145                 150                 155                 160
   Leu Ile Thr Gly Asn Cys Gly Asp Glu Gly Thr Leu Tyr Ser Ile Ser
                   165                 170                 175
   Tyr Asn Ile Ser Thr Asp Ala Glu Phe Lys Thr Phe Leu Gln Thr Arg
               180                 185                 190
   Trp Leu Pro Thr Ala Ser Asp Ala Glu Ile Asp Arg Leu Leu Ala Leu
           195                 200                 205
   Tyr Pro Ser Asp Pro Ser Gln Gly Ser Pro Phe Asp Thr Gly Ser Asp
       210                 215                 220
   Asn Ala Ile Thr Pro Gln Tyr Lys Arg Ser Ala Ala Leu Leu Gly Asp
   225                 230                 235                 240
   Leu Leu Phe Gln Thr Ser Arg Arg Tyr Leu Ile Asn Glu Leu Ser Gly
                   245                 250                 255
   Lys Gln Asp Ile Tyr Thr Tyr Ile His Asn Arg Gln Arg Arg Leu Pro
               260                 265                 270
   Val Leu Gly Ser Phe His Ala Ser Asp Leu Val Asn Val Tyr Gly Gly
           275                 280                 285
   Gly Asp Met Ser Asp Tyr Leu Ile Arg Phe Val Ala Thr Leu Asp Pro
       290                 295                 300
   Asn Gly Asn Thr Gly Ile Ser Trp Pro Lys Trp Thr Ser Glu Ala Pro
   305                 310                 315                 320
   Asn Met Leu Ala Phe Ser Asp Asp Glu Ala Val Pro Leu Ser Leu Thr
                   325                 330                 335
   Glu Asp Thr Tyr Arg
               340
<210> 3
   <211> 13
   <212> PRT
   <213> Flammulina velutipes
<400> 3
   Ala Ala Ile Asp Glu Ala Glu Phe Val Trp Thr Pro Arg
   1               5                   10
<210> 4
   <211> 14
   <212> PRT
   <213> Flammulina velutipes
<400> 4
   Thr Gly Cys Ser Asn Ala Ser Asp Thr Leu Ala Cys Leu Arg
   1               5                   10
<210> 5
   <211> 13
   <212> PRT
   <213> Flammulina velutipes
<400> 5
   Glu Ala Gly Val Gly Asn Leu Gly Leu Gln Asp Gln Arg
   1               5                   10
<210> 6
   <211> 8
   <212> PRT
   <213> Flammulina velutipes
<400> 6
   Thr Ala Asp Phe Asp Thr Leu Lys
   1               5
<210> 7
   <211> 11
   <212> PRT
   <213> Flammulina velutipes
<400> 7
   Tyr Val Gly Ala Phe Gly Gly Asp Pro Thr Lys
   1               5                   10
<210> 8
   <211> 18
   <212> PRT
   <213> Flammulina velutipes
<400> 8
   Phe Asp Gly Ala Leu Phe Ser Asp Leu Pro Gln Asn Leu Ile Leu Gln
   1               5                   10                  15
   Gly Lys
<210> 9
   <211> 28
   <212> PRT
   <213> Flammulina velutipes
<400> 9
   Leu Leu Ala Leu Tyr Pro Ser Asp Pro Ser Gln Gly Ser Pro Phe Asp
   1               5                   10                  15
   Thr Gly Ser Asp Asn Ala Ile Thr Pro Gln Tyr Lys
               20                  25
<210> 10
   <211> 17
   <212> PRT
   <213> Flammulina velutipes
<400> 10
   Phe Val Ala Thr Leu Asp Pro Asn Gly Asn Thr Gly Ile Ser Trp Pro
   1               5                   10                  15
   Lys
<210> 11
   <211> 14
   <212> PRT
   <213> Flammulina velutipes
<400> 11
   Ser Ala Ala Leu Leu Gly Asp Leu Leu Phe Gln Thr Ser Arg
   1               5                   10
<210> 12
   <211> 9
   <212> PRT
   <213> Flammulina velutipes
<400> 12
   Tyr Leu Ile Asn Glu Leu Ser Gly Lys
   1               5
<210> 13
   <211> 12
   <212> PRT
   <213> Flammulina velutipes
<400> 13
   Trp Leu Pro Thr Ala Ser Asp Ala Glu Ile Asp Arg
   1               5                   10
<210> 14
   <211> 725
   <212> PRT
   <213> Flammulina velutipes
<220>
   <223> Lipase
<400> 14
   Met Thr Arg Ala Pro Leu Pro His Leu Ser His His Gly Pro Thr Ser
   1               5                   10                  15
   Glu Asp Cys Leu Thr Ile Asn Val Val Lys Pro Ala Asn Val Glu Glu
               20                  25                  30
   Gly Ala Gln Leu Pro Val Val Ala Val Ser Ser Phe Glu Val Gly Gly
           35                  40                  45
   Thr Ser Glu Tyr Asn Gly Thr Ser Ile Val Ser Arg Ser Leu Glu Leu
       50                  55                  60
   Gln Glu Pro Val Ile Tyr Val Ser Phe Asn Tyr Arg Leu Asn Gly Phe
   65                  70                  75                  80
   Gly Phe Leu Ala Ser Lys Glu Val Lys Glu Ala Gly Val Gly Asn Leu
                   85                  90                  95
   Gly Leu Gln Asp Gln Arg Leu Ala Leu Lys Trp Ile Gln Lys Tyr Val
               100                 105                 110
   Gly Ala Phe Gly Gly Asp Pro Thr Lys Val Thr Ile Trp Gly Glu Ser
           115                 120                 125
   Ala Gly Ala Glu Ala Val Val Tyr His Met Val Ser Asn Asp Gly Asn
       130                 135                 140
   Thr Glu Gly Leu Tyr Arg Ala Ala Phe Ala Gln Ser Gly Ser Val Gly
   145                 150                 155                 160
   Ser Tyr Gly Gly Leu Glu Asn Gly Gln Asp Ala Tyr Asp Gly Ile Val
                   165                 170                 175
   Asn Lys Thr Gly Cys Ser Asn Ala Ser Asp Thr Leu Ala Cys Leu Arg
               180                 185                 190
   Thr Ala Asp Phe Asp Thr Leu Lys Ala Ala Ile Asp Glu Ala Glu Phe
           195                 200                 205
   Val Trp Thr Pro Arg Phe Asp Gly Ala Leu Phe Ser Asp Leu Pro Gln
       210                 215                 220
   Asn Leu Ile Leu Gln Gly Lys Val Ala Asp Val Pro Leu Ile Thr Gly
   225                 230                 235                 240
   Asn Cys Gly Asp Glu Gly Thr Leu Tyr Ser Ile Ser Tyr Asn Ile Ser
                   245                 250                 255
   Thr Asp Ala Glu Phe Lys Thr Phe Leu Gln Thr Arg Trp Leu Pro Thr
               260                 265                 270
   Ala Ser Asp Ala Glu Ile Asp Arg Leu Leu Ala Leu Tyr Pro Ser Asp
           275                 280                 285
   Pro Ser Gln Gly Ser Pro Phe Asp Thr Gly Ser Asp Asn Ala Ile Thr
       290                 295                 300
   Pro Gln Tyr Lys Arg Ser Ala Ala Leu Leu Gly Asp Leu Leu Phe Gln
   305                 310                 315                 320
   Thr Ser Arg Arg Tyr Leu Ile Asn Glu Leu Ser Gly Lys Gln Asp Ile
                   325                 330                 335
   Tyr Thr Tyr Ile His Asn Arg Gln Arg Arg Leu Pro Val Leu Gly Ser
               340                 345                 350
   Phe His Ala Ser Asp Leu Val Asn Val Tyr Gly Ser Gly Asp Met Ala
           355                 360                 365
   Asp Tyr Leu Ile Arg Phe Val Ala Thr Leu Asp Pro Asn Gly Asn Thr
       370                 375                 380
   Gly Ile Ser Trp Pro Lys Trp Thr Ser Glu Ala Pro Asn Met Leu Ala
   385                 390                 395                 400
   Phe Ser Asp Asp Glu Ala Val Pro Leu Ser Leu Thr Glu Asp Thr Tyr
                   405                 410                 415
   Arg Lys Glu Ala Met Ala Ala Ser Gly Met Thr Gln Ser Cys Tyr Ile
               420                 425                 430
   Tyr Val Trp Gln Arg Gln Ile Lys Ala Leu Leu Glu Ala Tyr Val Tyr
           435                 440                 445
   Gly Arg Tyr Pro Asp Arg Ser Ser Glu Lys Val Thr Ala Thr Arg Thr
       450                 455                 460
   Gly Asn Thr Val Ser Ile Thr Val Thr Ala Lys Gly Lys Thr Gly Arg
   465                 470                 475                 480
   Phe Ser Ala Thr Leu Ala Leu Pro Ser Gly Ala Ser Asn Asp Lys Pro
                   485                 490                 495
   Val Pro Ala Val Ile Val Ile Gly Phe Ala Asp Ser Thr Phe Leu Asn
               500                 505                 510
   Asn Gly Ile Ala Gln Ala Thr Phe Asp Ala Asn Ser Val Ala Ala Asp
           515                 520                 525
   Ser Thr Ser Lys Thr Gly Ala Phe Arg Asn Ile Tyr Ser Glu Asp Ala
       530                 535                 540
   Gly Ser Leu Leu Ala Trp Gly Trp Gly Ser His Arg Val Leu Asp Ala
   545                 550                 555                 560
   Leu Glu Leu Val Ala Pro Glu Ile Asp Ser Thr Arg Val Gly Val Met
                   565                 570                 575
   Gly Cys Ser Arg Tyr Gly Lys Gly Ala Leu Ala Ala Gly Ile Phe Asp
               580                 585                 590
   Asp Arg Leu Val Glu Thr Lys Gly Leu Ala Pro Trp Ser Arg Leu Phe
           595                 600                 605
   Leu Gly Gly Gln Lys Arg Ala Cys Lys Thr Ile Ser Pro Met Arg Ile
       610                 615                 620
   Val Phe Pro Trp Met Pro Thr Ser Ser Pro Leu Leu Leu Pro Arg Ala
   625                 630                 635                 640
   Pro Gln Phe Gly Ile Lys Met Asn Pro Glu Gly Val Ala Gly Val Thr
                   645                 650                 655
   Phe Pro Ala Thr Gln Ala Val Tyr Lys Phe Leu Gly Ala Glu Ala Asn
               660                 665                 670
   Ile Gly Val Ala Leu Arg Asn Ser Gly His Cys Asp Pro Ser Gly Thr
           675                 680                 685
   Thr Asn Val Leu Asp Phe Val Lys Ser Val Leu Leu Gly Ser Gln Arg
       690                 695                 700
   Thr Arg Asn Tyr Thr Thr Ile Ser Pro Tyr Gln Ala His Pro Glu Ala
   705                 710                 715                 720
   Tyr Pro Trp Ala Ile
                   725
<210> 15
   <211> 4305
   <212> DNA
   <213> Flammulina velutipes
<220>
   <223> genomic DNA Lipase
<400> 15
   atgactaggg cgccattacc acatctttcc caccagtata taaaggtaaa gtgttcaacc 60
   tgctatttac ttccatctct cacgcgatgc atcctcagct tctcgtggct gctctcactc 120
   ttgctggcgc tgcttctgct gcaagcatct ccgcccgtgc ggcgcccact gtttacttgg 180
   acagtgccac agttactggt gttgaaagcg ggggcgttgc ccaatttctc gggataccat 240
   tcgctaaatc gatgtgaggc ttctacgtcc tgtcataaat acgcgtttat acgaactaaa 300
   gtctagtgca aacgaatcac ggttacaact tccagtgccc gttgacgcgt attccgggac 360
   cttcgaggcg accgcctttg ggcccgcttg cgttcggaag gaatccgagt ccctgccgat 420
   tgaagttatt cagcgaattc ttccacagga aacgatcgag tttctcgtca atgttttagg 480
   cttcaatcct agtggtccga cttcggaaga ttgtgaggtt taggatgttt ggaggtggtg 540
   gtgaagctaa catcggtgtc taggtttgac gataaacgtc gtcaagcccg cgaatgttga 600
   agagggagct caacttcctg ttgttgcggt tagtatgttc ttccttttgg gcctgttgga 660
   tactgatgtt gagtttcttc tactatagtg gatttatgga ggtgcgaatt ggtattgtag 720
   ttactttgac ccgtgcatct aacccgatgt tcaggcagct ttgaagttgg cgggacctcc 780
   gagtaagttg gtaccgccaa agcgtcgttg cctgatacta aaggaagatg attctaggta 840
   taacggtacg agcatcgtat cgcggtccct cgagctacag gaaccagtca tttatgtgtc 900
   ctttaactat cgtctcaacg gtacgtttca ctgcagcaag tgtacgctgc gaggccactt 960
   gacgatcccc tcgtaggctt cggattcctg gcgagcaaag aagttaagga agccggcgta 1020
   ggcaacttgg gcttacagga tcgtaagtcg ccacatcgtt tcttctctgt atacccaatc 1080
   tcaacgattc acagaacggt tggccctcaa gtggatacag aagtatgttg gtgcattcgg 1140
   cggagatcct accaaagtaa caatgtaagt tggttcagcg tgtccatggg cagagacctc 1200
   atccgtacat atgtcagatg gggagaatct gcgggagcgg aggcagttgt ctaccacatg 1260
   gtttcgaacg atggtaacac ggagggcctc taccgagcgg ctttcgcgca atcgggctcg 1320
   gtcggttcct atggcggtct tgaaaatgga caagatggta aggactgctg ctcatcaatt 1380
   aggatgctac ctaattgttc tacgcagcct acgacgggat cgtcaacaag accggctgtt 1440
   ccaacgcttc agataccctc gcttgcttgc gaaccgccga tttcgacacc ttgaaagcgg 1500
   ctatcgacga agcggaattt gtatggacgc cccgatttga tggtgcactc tttagcgacc 1560
   tccctcagaa ccttatattg cagggaaaag tagcggatgt ccccctgatc accggtacgt 1620
   ggcgtccgag tgtgttcgtc ccatcgtaag catgcttaac atcgtggcag gaaactgtgg 1680
   cgacgaggga acactctatt ccatcagcta taacattagg ttggggtgtg tctctgtgtc 1740
   tctaagcctg ttctaactgt gtcgcagtac cgacgccgag tttaagacat tcctacagac 1800
   tcgctggctt cccacagcat ccgatgcaga gattgacagg ctactagctt tgtacccatc 1860
   agacccctcc caaggctcgc cattcgacac tggctctgac aacgccataa cgccacagta 1920
   caaacgttcc gccgctttac taggagatct actcttccaa acttctcgga ggtacctgat 1980
   caacgaactg tccggcaagc aagatatcta cacctacagt aagtcgttca ggtcgacgag 2040
   aactgggact aacggattca acgtgtagta cacaatcgtc agagaagact cccggtcttg 2100
   ggatcgttcc atgcttctga ccttgtcaat gtgtacggca gtggcgatat ggctgattat 2160
   ctcattcgtt tcgtcgccac actggatcct aacggaaata ctgggatttc ctggccgaaa 2220
   tggacgtccg aagcaccaaa catgctagca ttcagcgatg acgaagccgt cccactgagt 2280
   cttacggagg atacatatcg caaggaggcc atggcggctt ccggtgaggt cttgtttgcg 2340
   aacccatcgt gaggttgtct acctgtatta gctggtacga caccgtcgct ctttgaatcg 2400
   aattaatacc acccttttcg tttatgcatg ccaggccacg aatgcagatt ttgaattttt 2460
   gataaatgtg gcgcacctat caatgcatca atgcaaggcc aactgtctac tgaccgttgg 2520
   ataggtatga cccaatcatg ttacatatat gtctggcagc gccgtaagca tgattctgat 2580
   ttttcagctc ttctctcata ttctccctaa gtgttcaaac gagatattca aagtctatgg 2640
   aagaagaccc aaagctgcca ggcagtggag tccgagtcgg acgcgaagca ctagcggtgt 2700
   aaaagcgtga tcgcgaacca cggcagttta tcctctctgc tgacgaacgt ttgttcgtct 2760
   tcccgagcat tttcctgcag aagagattta agctggaact tgtaagctcc acctcgtact 2820
   cactctaaca atgctttaca caacgttctt ttcgatgata ttcttggtac tcttagcggt 2880
   acatcgctcg tctggtcaat gcgcttcact tccttctcct cttccaggtt acaacgacct 2940
   gactgcatcg atccctctcc cggatccctt cacattctac aacggaacgg ccctcacctc 3000
   tcctgatgat tgggcgtgtc gacgcacaga gattaaggcc ctcctcgaag catacgtata 3060
   tggccgctac cccgaccgtt ctagcgagaa agtcaccgcc actcgaacgg gaaataccgt 3120
   ctctatcacc gtcaccgcga aaggaaagac aggtcgattc tccgccacgt tagccctccc 3180
   ttccggggct tccaatgata aacccgtccc ggcggttatt gttatcggat ttgccgactc 3240
   aacttttctg aataacggaa ttgcgcaggc tacgttcgac gctaacagtg tggcggccga 3300
   ttctacctcc aagacaggcg cgttccgcaa catctattct gaggatgctg gttcactttt 3360
   agcttgggga tggggatccc atcgtgtcct ggatgcgctc gagttggtcg cgcctgagat 3420
   tgattcgaca cgtgtgggtg ttatgggatg tagtcgatac gggaaaggtg ccctcgctgc 3480
   tgggattttc gatgacagag tgtgttaaac ccctctctct catagtactt gctgattttt 3540
   gttatgtcgt tgctttcccc agatctcgtt gacgatccct atgtccagtg gtgtgttggg 3600
   cacttcacca attaggttcc attatgatca aggtcctatt gcacctctat gttgagcaat 3660
   cgcagcacta atattgcttc catttagctg gtcgaaacga aaggcttggc tccatggtcg 3720
   aggctattcc ttggtggaca aaagcgagct tgcaagacta tatccccgat gagaatcgtc 3780
   ttcccgtgga tgccaacctc ctcaccgctg ctgttgcccc ggtaatttaa aaaaactccc 3840
   ctttaaatat tattctgaca gacactcgtg aagcgcgccg cagtttggga tcaaggtgcg 3900
   ccacatttac tacttcggga caacatctca attcaattca ggtcaaactg aataccaggt 3960
   ttttgtcatc aaaaagagcc ttagtgcaat ctctgactgt tgcggatacg tagatgaacc 4020
   cagagggtgt ggcaggcgtt accttccctg ctactcaagc agtatacaag ttccttggcg 4080
   ctgaagcaaa tatcggagtt gcactccgta acagtgggca ctgcgatcct tctggaacgt 4140
   aggtaattct gcctatattt gaagatctca tactgataga gcatggatag aactaatgta 4200
   ttggacttcg tcaagtcagt ccttcttggc tcgcagagga cacgcaacta cacaacgatc 4260
   tctccgtatc aggcgcatcc tgaagcctac ccatgggcca tttga 4305
<210> 16
   <211> 2177
   <212> DNA
   <213> Flammulina velutipes
<220>
   <223> cDNA Lipase
<400> 16
   atgactaggg cgccattacc acatctttcc caccatggtc cgacttcgga agattgtttg      60
   acgataaacg tcgtcaagcc cgcgaatgtt gaagagggag ctcaacttcc tgttgttgcg     120
   gttagcagct ttgaagttgg cgggacctcc ggtataacgg tacgagcatc gtatcgcggt     180
   ccctcgagct acaggaacca gtcatttatg tgtcctttaa ctatcgtctc aacggcttcg     240
   gattcctggc gagcaaagaa gttaaggaag ccggcgtagg caacttgggc ttacaggatc     300
   aacggttggc cctcaagtgg atacagaagt atgttggtgc attcggcgga gatcctacca     360
   aagtaacaat atggggagaa tctgcgggag cggaggcagt tgtctaccac atggtttcga     420
   acgatggtaa cacggagggc ctctaccgag cggctttcgc gcaatcgggc tcggtcggtt     480
   cctatggcgg tcttgaaaat ggacaagatg cctacgacgg gatcgtcaac aagaccggct     540
   gttccaacgc ttcagatacc ctcgcttgct tgcgaaccgc cgatttcgac accttgaaag     600
   cggctatcga cgaagcggaa tttgtatgga cgccccgatt tgatggtgca ctctttagcg     660
   acctccctca gaaccttata ttgcagggaa aagtagcgga tgtccccctg atcaccggaa     720
   actgtggcga cgagggaaca ctctattcca tcagctataa cattagtacc gacgccgagt     780
   ttaagacatt cctacagact cgctggcttc ccacagcatc cgatgcagag attgacaggc     840
   tactagcttt gtacccatca gacccctccc aaggctcgcc attcgacact ggctctgaca     900
   acgccataac gccacagtac aaacgttccg ccgctttact aggagatcta ctcttccaaa     960
   cttctcggag gtacctgatc aacgaactgt ccggcaagca agatatctac acctacatac    1020
   acaatcgtca gagaagactc ccggtcttgg gatcgttcca tgcttctgac cttgtcaatg    1080
   tgtacggcag tggcgatatg gctgattatc tcattcgttt cgtcgccaca ctggatccta    1140
   acggaaatac tgggatttcc tggccgaaat ggacgtccga agcaccaaac atgctagcat    1200
   tcagcgatga cgaagccgtc ccactgagtc ttacggagga tacatatcgc aaggaggcca    1260
   tggcggcttc cggtatgacc caatcatgtt acatatatgt ctggcagcgc cagattaagg    1320
   ccctcctcga agcatacgta tatggccgct accccgaccg ttctagcgag aaagtcaccg    1380
   ccactcgaac gggaaatacc gtctctatca ccgtcaccgc gaaaggaaag acaggtcgat    1440
   tctccgccac gttagccctc ccttccgggg cttccaatga taaacccgtc ccggcggtta    1500
   ttgttatcgg atttgccgac tcaacttttc tgaataacgg aattgcgcag gctacgttcg    1560
   acgctaacag tgtggcggcc gattctacct ccaagacagg cgcgttccgc aacatctatt    1620
   ctgaggatgc tggttcactt ttagcttggg gatggggatc ccatcgtgtc ctggatgcgc    1680
   tcgagttggt cgcgcctgag attgattcga cacgtgtggg tgttatggga tgtagtcgat    1740
   acgggaaagg tgccctcgct gctgggattt tcgatgacag actggtcgaa acgaaaggct    1800
   tggctccatg gtcgaggcta ttccttggtg gacaaaagcg agcttgcaag actatatccc    1860
   cgatgagaat cgtcttcccg tggatgccaa cctcctcacc gctgctgttg ccccgcgcgc    1920
   cgcagtttgg gatcaagatg aacccagagg gtgtggcagg cgttaccttc cctgctactc    1980
   aagcagtata caagttcctt ggcgctgaag caaatatcgg agttgcactc cgtaacagtg    2040
   ggcactgcga tccttctgga acaactaatg tattggactt cgtcaagtca gtccttcttg    2100
   gctcgcagag gacacgcaac tacacaacga tctctccgta tcaggcgcat cctgaagcct    2160
   acccatgggc catttga                                                   2177
<210> 17
   <211> 341
   <212> PRT
   <213> Flammulina velutipes
<220>
   <223> Fragment of SEQ ID NO: 14
<400> 17
   Leu Asn Gly Phe Gly Phe Leu Ala Ser Lys Glu Val Lys Glu Ala Gly
   1               5                   10                  15
   Val Gly Asn Leu Gly Leu Gln Asp Gln Arg Leu Ala Leu Lys Trp Ile
               20                  25                  30
   Gln Lys Tyr Val Gly Ala Phe Gly Gly Asp Pro Thr Lys Val Thr Ile
           35                  40                  45
   Trp Gly Glu Ser Ala Gly Ala Glu Ala Val Val Tyr His Met Val Ser
       50                  55                  60
   Asn Asp Gly Asn Thr Glu Gly Leu Tyr Arg Ala Ala Phe Ala Gln Ser
   65                  70                  75                  80
   Gly Ser Val Gly Ser Tyr Gly Gly Leu Glu Asn Gly Gln Asp Ala Tyr
                   85                  90                  95
   Asp Gly Ile Val Asn Lys Thr Gly Cys Ser Asn Ala Ser Asp Thr Leu
               100                 105                 110
   Ala Cys Leu Arg Thr Ala Asp Phe Asp Thr Leu Lys Ala Ala Ile Asp
           115                 120                 125
   Glu Ala Glu Phe Val Trp Thr Pro Arg Phe Asp Gly Ala Leu Phe Ser
       130                 135                 140
   Asp Leu Pro Gln Asn Leu Ile Leu Gln Gly Lys Val Ala Asp Val Pro
   145                 150                 155                 160
   Leu Ile Thr Gly Asn Cys Gly Asp Glu Gly Thr Leu Tyr Ser Ile Ser
                   165                 170                 175
   Tyr Asn Ile Ser Thr Asp Ala Glu Phe Lys Thr Phe Leu Gln Thr Arg
               180                 185                 190
   Trp Leu Pro Thr Ala Ser Asp Ala Glu Ile Asp Arg Leu Leu Ala Leu
           195                 200                 205
   Tyr Pro Ser Asp Pro Ser Gln Gly Ser Pro Phe Asp Thr Gly Ser Asp
       210                 215                 220
   Asn Ala Ile Thr Pro Gln Tyr Lys Arg Ser Ala Ala Leu Leu Gly Asp
   225                 230                 235                 240
   Leu Leu Phe Gln Thr Ser Arg Arg Tyr Leu Ile Asn Glu Leu Ser Gly
                   245                 250                 255
   Lys Gln Asp Ile Tyr Thr Tyr Ile His Asn Arg Gln Arg Arg Leu Pro
               260                 265                 270
   Val Leu Gly Ser Phe His Ala Ser Asp Leu Val Asn Val Tyr Gly Ser
           275                 280                 285
   Gly Asp Met Ala Asp Tyr Leu Ile Arg Phe Val Ala Thr Leu Asp Pro
       290                 295                 300
   Asn Gly Asn Thr Gly Ile Ser Trp Pro Lys Trp Thr Ser Glu Ala Pro
   305                 310                 315                 320
   Asn Met Leu Ala Phe Ser Asp Asp Glu Ala Val Pro Leu Ser Leu Thr
                   325                 330                 335
   Glu Asp Thr Tyr Arg
               340

## Beschreibung

Die vorliegende Erfindung betrifft die Herstellung von Käse, z.B. Salzlakenkäse wie Feta, insbesondere die Verwendung einer von einem Basidiomyceten abgeleiteten Lipase zur Herstellung von Käse und Verfahren zur Herstellung von Käse, bei denen eine von Basidiomyceten abgeleitete Lipase auf ein Vorprodukt der Käseherstellung, z.B. auf Käsereimilch oder reifenden Käse, einwirkt. Damit wird auch ein mit den erfindungsgemäßen Verfahren hergestellter Käse zur Verfügung gestellt, welcher ein charakteristisches Aroma aufweist. Gegenstand der Erfindung sind ferner Verfahren zur Herstellung einer von einem Basidiomyceten abgeleiteten Lipase aus einer Basidiomyceten-Kultur sowie entsprechende Lipasen, z.B. aus *Flammulina velutipes* oder *Pleurotus citrinopileatus.*

Im Stand der Technik kommen Lipasen in der Käseherstellung zum Einsatz, da sie zur Erzeugung eines typischen Käsearomas beitragen. Lipasen katalysieren die Spaltung von Esterbindungen, wie beispielsweise die Hydrolyse von Triglyceriden zu Glycerol und freien Fettsäuren, wobei vor allem freigesetzte kurzkettige Fettsäuren direkt zum Aroma des Käses beitragen. Durch den Einsatz von Lipasen in der Käseherstellung kann die Ausbildung des für den jeweiligen Käse typischen Aromas induziert werden. Die Verwendung von Lipasen tierischen Ursprungs und die Verwendung von Lipasen mikrobiellen Ursprungs zu diesem Zweck sind bekannt. Dabei unterscheidet sich das Substratspektrum verschiedener Lipase, so dass der Einsatz unterschiedlicher Lipasen zu der Freisetzung anderer Fettsäuren und damit zu einem unterschiedlichen Aroma des Käses führt.

Tierische Lipasen werden im Stand der Technik beispielsweise aus dem Drüsengewebe aus Mund- und Rachenraum von Jungtieren wie z. B. Kälbern, Lämmern oder Ziegenkitzen gewonnen. US 5320959 A (1994) beschreibt ein Verfahren zur Extraktion von Lipase aus dem Mund- und Rachenraum von Jungtieren. Ein für Feta-Käse oder ähnliche Käse typisches Aroma entsteht beispielsweise durch die Einwirkung einer solchen Zungengrundlipase (auch als Ziegenlipase bezeichnet), welche die Carbonsäuren Essigsäure, Buttersäure, Capronsäure, Caprylsäure und Caprinsäure aus Triglyceriden freisetzen kann, auf Milch oder Vorprodukte der Käseherstellung.

Nachteilig ist, dass Käse, der unter Verwendung von Lipasen tierischen Ursprungs hergestellt wurde, nicht für Personen, die sich streng vegetarisch ernähren wollen, geeignet ist. Des Weiteren kommt ein Käse, der unter Verwendung tierischer Lipasen hergestellt wurde, auch für Mitglieder von Glaubensrichtungen, deren Lebensweise mit bestimmten Ernährungsregeln verbunden ist, die sich beispielsweise koscher oder halal ernähren wollen, nicht in Betracht. Um diese Problematik zu umgehen, lassen einige Käseproduzenten seit einigen Jahren die tierische Lipase weg, was dazu geführt hat, dass einige Käsesorten ihr charakteristisches Aroma verloren haben.

Alternativ zu tierischen Lipasen ist im Stand der Technik die Verwendung von mikrobiellen Lipasen, beispielsweise aus Schimmelpilzen, beschrieben.

US 3973042 A beschreibt die Verwendung von mikrobiellen Lipasen aus Schimmelpilzen oder aus tierischen Quellen zur Herstellung von Blauschimmelkäse. US 4595594 A offenbart ein Verfahren zur Herstellung eines Käseproduktes mit intensivem Käsegeschmack unter Verwendung von tierischen oder mikrobiellen Lipasen. EP 1535519 A beschreibt die Verwendung von Lipasen, insbesondere Pilzlipasen, in Aromatisierungssystemen für die Käseherstellung, die die Herstellung von Käse mit dem gewünschten Geschmacksprofil ermöglichen. EP 0150743 B1 offenbart eine Zusammensetzung zur Beschleunigung des Reifungsprozesses von Käse unter Verwendung von Lipasen. EP 1085817 B1 beschreibt ein Verfahren zur Herstellung eines Käse-Aromas unter Verwendung von Lipasen. US20110123674 beschreibt die Herstellung von Käse-Aromakompositionen zur Erzeugung eines Käsegeschmacks in Lebensmitteln.

Dem gegenüber steht der Fachmann vor dem Problem, alternative Verfahren zur Herstellung von Käse mit charakteristischem Aroma bereitzustellen, bei dem nicht-tierische Lipasen eingesetzt werden sollen, welche die Herstellung von vegetarischen, koscherem und halal-gerechtem Käse erlauben. Die Aufgabe wird durch die vorliegende Erfindung gelöst, insbesondere durch den Gegenstand der Ansprüche.

Die Erfinder der vorliegenden Anmeldung haben entdeckt, dass aus Basidiomyceten abgeleitete Lipasen, in der Käseherstellung eingesetzt, ein ähnliches Aroma erzeugen wie tierische Lipasen, insbesondere wie die klassischerweise in der Herstellung von Salzlakenkäse, etwa Feta, eingesetzten Lipasen, z.B. Ziegenzungengrundlipase.

Die vorliegende Erfindung ermöglicht daher die Verwendung einer von einem Basidiomyceten abgeleiteten Lipase zur Herstellung von Käse.

Vorteilhafterweise können Käse, die unter Verwendung dieser Lipase herstellt wurden, vegetarische, koschere oder halal Käse sein. Dasselbe gilt für die als Nebenprodukt bei der Käseproduktion anfallende Molke, welche als Nahrungsmittel oder auch beispielsweise als Füllstoff für Medikamente in der Pharmaindustrie Anwendung finden kann.

Die vorliegenden Erfindung ermöglicht daher auch ein Verfahren zur Herstellung von Molkeprodukten, z.B. Molke, Lactose oder Molkeproteinen wie alpha-Lactalbumin, beta-Lactoglobulin oder Lactoferrin, welche vegetarisch, koscher und/oder halal sein können, bei dem eine von einem Basidiomyceten abgeleiteten Lipase zur Herstellung von Käse verwendet und die Molke abgetrennt wird.

Ebenfalls Gegenstand der Erfindung ist ein Verfahren zur Herstellung von Käse oder Molkeprodukten, umfassend das Einwirken einer von einem Basidiomyceten abgeleiteten Lipase auf ein Vorprodukt der Käseherstellung, bevorzugt auf Milch.

Der Basidiomycet, von dem die Lipase abgeleitet ist, ist bevorzugt für Menschen nicht giftig, z.B. ein Speisepilz. Bei Verwendung einer Lipase aus für Menschen giftigen Basidiomyceten ist bei der Isolierung der Lipase besonderes Augenmerk auf die Abtrennung von Giften von der Lipase zu legen. Alternativ kann auch eine gentechnisch in einer anderen Wirtszelle hergestellte Lipase aus giftigen Basidiomyceten eingesetzt werden. Vorteilhafterweise ist der Basidiomycet ein Pilz aus der Unterabteilung Agaricomycotina, bevorzugt aus der Klasse Agaricomycetes, bevorzugt aus der Unterklasse Agaricomycetidae, besonders bevorzugt aus der Ordnung Agaricales, z.B. aus den Familien der Physalacriaceae oder Pleurotaceae.

Bevorzugt kann der Basidiomycet in Submerskultur kultiviert werden. Eine Emers-Kultivierung ist ebenfalls möglich.

In einer besonders vorteilhaften Ausgestaltung ist der Basidiomycet ausgewählt aus der Gruppe umfassend *Flammulina spp., Pleurotus spp., Agrocybe spp., Armillaria spp., Auricularia spp., Clitocybe spp., Fistulina spp., Hericium spp., Hypholoma spp., Hypsizygus spp., Kuehneromyces spp., Laetiporus spp., Lactarius spp., Lentinula spp., Lentinus spp., Lycoperdon spp., Macrolepiota spp., Phallus spp., Piptoporus spp., Panellus spp., oder Polyporus spp.,* insbesondere *Flammulina velutipes, Pleurotus citrinopileatus, Agrocybe aegerita, Armillaria bulbosa, Armillaria gallica, Armillaria melea, Auricularia fuscosuccinea, Clitocybe geotropa, Fistulina hepatica, Hericium erinaceus, Hericium cirrhatum, Hericium coralloides, Hypholoma capnoides, Hypsizygus tessulatus, Kuehneromyces mutabilis, Laetiporus sulphureus, Lactarius deliciosus, Lentinula edodes, Lentinus squarrolusus, Lycoperdon pyriforme, Macrolepiota procera, Phallus impudicus, Piptoporus betulinus, Pleurotus eryngii, Pleurotus flabellatus, Pleurotus ostreatus, Panellus serotinus, oder Polyporus umbellatus.*

Bevorzugt ist der Basidiomycet *Flammulina velutipes* oder *Pleurotus citrinopileatus,* z.B. *Flammulina velutipes* hinterlegt unter der Stammnummer DSM-1658 oder *Pleurotus citrinopileatus* hinterlegt unter der Stammnummer DSM-5341 bei der Deutschen Sammlung von Mikroorganismen und Zellkulturen GmbH. Aus diesen Basidiomyceten, vor allem aus *Flammulina velutipes,* abgeleitete Lipasen führten zu einem besonders guten Aroma von damit hergestelltem Käse, und eignen sich insbesondere zur Herstellung von Salzlakenkäse, z.B. Feta.

Im Rahmen der Erfindung werden keine ganzen toten oder lebenden Basidiomyceten eingesetzt, sondern die verwendete Lipase ist isoliert. Bevorzugt wird die Lipase aus einer Basidiomyceten-Kultur isoliert. In einer anderen Ausführungsform wird die Lipase unter Verwendung von gentechnisch veränderten Organismen, z.B. Hefen oder Bakterien, hergestellt. Gentechnisch veränderte Organismen zur Herstellung der Lipase können beispielsweise *S. cerevisiae, P. pastoris* oder *E. coli* sein. Isoliert bedeutet, dass die Lipase zumindest von einigen anderen Bestandteilen der Zellen, in denen sie hergestellt wurde, abgetrennt ist, optional von im Wesentlichen allen andere Bestandteilen. Verfahren zur Isolation bzw. Aufreinigung sind hierin beschrieben.

Lipasen werden aufgrund ihrer Fähigkeit zur Spaltung von Esterbindungen von Triglyceriden auch als Esterasen bezeichnet. Die Begriffe Lipase und Esterase werden hier als Synonyme verwendet. Der Begriff "eine" oder "ein" umfasst im Rahmen dieser Erfindung immer ein oder mehrere, sofern nicht ausdrücklich anders gekennzeichnet, so dass eine Lipase im Sinne dieser Erfindung ein oder mehrere Lipasen, z.B. auch eine Mischung von verschiedenen Homologen und/oder Derivaten dieser Lipase oder von verschiedenen Lipasen umfasst. Insbesondere zur Herstellung von Salzlakenkäse bevorzugte Lipasen sind dazu in der Lage, aus Triglyceriden mit entsprechenden Fettsäuren die Fettsäuren Essigsäure, Buttersäure, Capronsäure, Caprylsäure und Caprinsäure abzuspalten.

Bevorzugt ist Gegenstand der Erfindung ein Verfahren zur Herstellung von Käse. Der Käse kann z.B. ein Salzlakenkäse, Pasta-Filata-Käse, Hartkäse (auch Extrahartkäse), Schnittkäse, halbfester Schnittkäse, Halbhartkäse, Halbweichkäse, Weichkäse, oder Frischkäse sein, z.B. Feta, Bergkäse, Gruyere, Emmentaler, Cheddar, Appenzeller, Comté, Jurassic, Sbrinz, Tilsiter, Raclette, Gouda, Edamer, Provolone, Kaschkawal, Romano, Parmesan, Grana Padano, Pecorino, Manchego, Graviera, Kefalotir, ein Weichkäse mit Schimmelreifung oder ein Weichkäse mit Rotschmiere, Mozzarella, Camembert, Brie oder Frischkäse. Bevorzugt handelt es sich um einen reifenden Käse, also z.B. kein Quark oder Frischkäse, um die Entwicklung eines deutlichen Aromas zu ermöglichen. Es kann sich um Rahmkäse, Vollfettkäse, Viertelfettkäse oder Magerkäse handeln.

Bevorzugt ist der Käse ein aromatischer Käse. Ein Käsetyp, der erfindungsgemäß besonders vorteilhaft hergestellt werden kann, ist ein Salzlakenkäse wie Fetakäse oder ein Käse griechischer Art (dies wird hierin unabhängig von der geographischen Herkunft synonym benutzt), Hirtenkäse, Balkankäse, bulgarischer Salzlakenkäse (z.B. Sirene oder Schipka-Käse), Beyaz peynir, Valbreseo. Die besondere Eignung von Lipasen aus *Pleurotus citrinopileatus* oder *Flammulina velutipes* zur Herstellung derartiger Käse ist im Beispielteil beschrieben.

Auch andere aromatische Käse können mit diesen Lipasen oder Lipasen mit ähnlichen Charakteristika, insbesondere ähnlichem Substratprofil vorteilhafterweise hergestellt werden, z.B. Provolone, Kaschkawal, Romano, Pressato, Parmesan, Grana Padano, Pecorino, Rigatino, Crotonese, Canestrato, Fiore Sardo, Mozzarella, Manchego, Bergkäse, Gruyere, Emmentaler, Cheddar, Appenzeller, Comté, Jurassic, Sbrinz, Tilsiter. Auch andere Käse lassen sich - je nach gewünschtem Aroma - mit anderen Basidiomyceten-Lipasen vorteilhaft herstellen.

In einer vorteilhaften Ausgestaltung umfasst die erfindungsgemäße Käseherstellung das in Kontakt bringen der von einem Basidiomyceten abgeleiteten Lipase mit einem Vorprodukt der Käseherstellung, z.B. Milch. Das Verfahren kann folgende Schritte umfassen:
a) Bereitstellen eines Käsevorprodukts, welches Käsereimilch umfasst,
b) Dicklegen des Käsevorprodukts, wobei Gallerte (auch als Dickete bezeichnet) entsteht,
c) Schneiden der Gallerte,
d) Formen,
e) Salzen, und
f) Reifen,
wobei man ein Vorprodukt der Käseherstellung mit einer von einem Basidiomyceten abgeleiteten Lipase in Kontakt bringt, was in einem der Schritte a, b, c oder d, bevorzugt aber in Schritt a oder b erfolgt, am meisten bevorzugt in Schritt b.

Das Käsevorprodukt in Schritt a umfasst Käsereimilch, z.B. Kuhmilch, Schafsmilch, Ziegenmilch, Büffelmilch oder ein pflanzliches Milchersatzprodukt, z.B. Sojamilch, Hafermilch, Reismilch, Dinkelmilch, Nussmilch oder Mandelmilch, Milch aus Flohsamenschalen, welches hierin auch als Milch bezeichnet wird. Am häufigsten wird Käse unter Verwendung von Kuhmilch hergestellt. Salzlakenkäse wird z.B. oft aus Kuhmilch, Ziegenmilch oder Schafsmilch hergestellt. Veganer Salzlakenkäse kann z.B. auch auf Basis von Sojamilch hergestellt werden.

Die Milch kann Rohmilch oder pasteurisierte Milch sein. Üblicherweise wird die Milch zentrifugiert bzw. separiert, bevorzugt auch homogenisiert, um z.B. Lipasen für die Lypolyse eine höhere Angriffsfläche zu bieten. Auch eine Pasteurisierung findet statt, es sei denn, man will Rohmilchkäse herstellen. Um den gewünschten Fettgehalt des Käses zu erhalten, wird die Milch meist entrahmt und anschließend z.B. mit Sahne auf einen definierten Fettgehalt eingestellt.

Das Käsevorprodukt kann auf einen Fettgehalt von ca. 1,7 - 10%, bevorzugt 3-8,5% (v/v) eingestellt werden, z.B. von 3,2 - 3,6% bei Sbrinz, 3,4 - 3,7 % bei Provolone, 3,3-4,5% oder 3,5-4,2 % bei Salzlakenkäse, wobei der Fettgehalt entsprechend der erforderlichen Fettgehaltsstufe (Fett i. Tr.) des Käseendprodukts angepasst werden muss. Dem Käsevorprodukt kann bei der Bereitstellung oder auch später in Schritt b Calcium, z.B. in Form von Calciumchlorid, zugegeben werden.

Vor dem Dicklegen wird in Schritt b üblicherweise (z.B. für Salzlakenkäse, Pasta-Filata-Käse, Hartkäse (auch Extrahartkäse), Schnittkäse, halbfester Schnittkäse, Halbhartkäse, Weichkäse) das Käsevorprodukt mit Hilfe von Starterkulturen, welche Milchsäurebakterien (z.B. *Lactobacillus* sp. *Leuconostoc sp., Lactococcus sp.*) umfassen, in Kontakt gebracht und vorgereift und anschließend optional enzymatisch, z.B., mit Lab, zum Gerinnen gebracht.

Als Starterkulturen können z.B. mesophile und/oder thermophile Direktstarterkulturen, beispielsweise Lyofast M 036 L (Sacco Srl.) verwendet werden.

Es kann tierisches Lab, z.B. Lab aus Kälbermagen, eingesetzt werden, bevorzugt wird zur Herstellung eines vegetarischen, koscheren oder halal Produkts jedoch ein Labersatzstoff eingesetzt. Dabei handelt es sich um mikrobielles und/oder biotechnologisch hergestelltes Lab, z.B. mit Hilfe von Schimmelpilzen wie *Mucor mihei* oder *Aspergillus niger* hergestelltes Lab. Bevorzugt ist das Lab mikrobiell hergestelltes Labenzym, sog. Mikrolab, z.B. opti-lase (optiferm GmbH).

Auch pflanzliche Enzyme, z.B. aus *Cynara cardunculus,* können verwendet werden. Zum Dicklegen wird das Käsevorprodukt üblicherweise erwärmt, z.B. auf 27°-45°C, z.B. auf 36-38°C bei Provolone, z.B. auf 31-32°C bei Kaschkawal, z.B. auf 32-34°C bei Salzlakenkäse oder etwa 33°C.

Bei nicht reifenden Käsen, z.B. Quark, Frischkäse, Sauermilchkäse setzt man nur Milchsäurebakterien zu, kein Lab oder nur eine kleine Menge Lab zur Verbesserung der Säuregerinnung.

Bevorzugt wird die aus einem Basidiomyceten abgeleitete Lipase, z.B. zur Herstellung von Salzlakenkäse, dem Käsevorprodukt gleichzeitig mit der Starterkultur und optional Calcium zugegeben. Es ist aber auch möglich, das Milchvorprodukt bereits vorher oder nachher (z.B. bei Zugabe von Lab) mit den Lipasen zu mischen.

Die Lipase kann bei der erfindungsgemäßen Verwendung oder im erfindungsgemäßen Verfahren in einer Endkonzentration von 70 -285 U/L bezogen auf Caprylat in 3 L Käsevorprodukt, z.B. Käsereimilch zugegeben werden. Besonders bevorzugt wird die Lipase in einer Konzentration von 100 -200 U/L oder 150-170 U/L zugegeben.

Das Dicklegen kann ca. 25 - 75 min dauern, bevorzugt ca. 30 - 45 min.

Eine Vorreifung kann, z.B. nach Mischen der auf ca. 4,2% Fett eingestellten Milch mit der Starterkultur, Calciumchlorid und der Lipase für ca. 30-60 min, z.B. 45-50 min oder etwa 45 min erfolgen. Nach Zugabe von Lab (z.B. opti-lase, optiferm GmbH) erfolgt über die nächsten 15-20 min, ca. 16 min die Gerinnung. Nach weiterer Dickung von ca. 30-60 min, z.B. 45-50 min oder etwa 45 min hat die Dickete die gewünschte Festigkeit z.B. zur Herstellung von Salzlakenkäse erreicht.

Hat die dickgelegte Milch die gewünschte Festigkeit, so wird sie in Schritt c, z.B. mit einer Käseharfe, geschnitten. Das Produkt des Schneidens wird als Käsebruch bezeichnet. Je feiner der Käsebruch zerkleinert wird, desto mehr Molke setzt sich ab und umso härter wird der fertige Käse. Für Salzlakenkäse wird der Käsebruch in ca. Haselnuss-große Stücke geschnitten.

Optional kann der Käsebruch gebrannt werden.

Das Formen in Schritt d kann z.B. Verziehen und Abfüllen in Formen sowie Wenden (z.B. 2-10-mal, z.B. ca. 4-mal) umfassen. Durch Abtropfen, Pressen und/oder Wenden kann weitere Molke vom Käsebruch getrennt werden.

Das Salzen als Schritt d wird bei Herstellung aller Käsesorten durchgeführt, außer bei Frischkäse, und kann durch Trockensalzen oder bevorzugt durch Baden in Salzlake stattfinden. Der Salzgehalt der Lake beträgt je nach Käsesorte 15 - 25% (m/v), bevorzugt 18 - 22% (m/v). Zur Herstellung von Salzlakenkäse kann ein Salzbad von ca. 60 min bei 15°C und einem Salzgehalt von ca. 20% erfolgen, wobei der pH des Salzbads idealerweise dem pH des gesäuerten Käseteigs zu Beginn des Salzens entspricht, z.B. pH 5,2.

Als Schritt e erfolgt die Reifung des Käses, die für alle Käse mit Ausnahme der Frischkäse erforderlich ist. Eine tage-, wochen- oder monatelange Reifung ist wichtig für die Erreichung des vorgegebenen Verzehrstatus und die Entwicklung des sortentypischen Aromas. Dabei spielen Stoffwechselvorgänge von Mikroorganismen eine bedeutende Rolle, aber im Rahmen der Erfindung auch die Spaltung von Triglyceriden durch die erfindungsgemäßen Lipasen. Während der Reife werden die Laibe optional gewendet, bestrichen, gebürstet, mit Edelschimmel oder Rotschmiere behandelt oder in Kräutern gewälzt. Die Reifung kann zwischen zwei Wochen oder bis zu mehreren Jahren dauern. Bevorzugt erfolgt die Reifung bei hoher Luftfeuchtigkeit (z.B. 70-95%) und im Wesentlichen gleichbleibender Temperatur, bevorzugt bei Temperaturen unter 20°C, z.B. 10-15°C. Die Raumkonditionen im Reifelager variieren in Abhängigkeit von der jeweiligen Käsesorte, von der Reifungszeit und Käsebehandlung.

Für die Herstellung von Salzlakenkäse wird der Käse üblicherweise nach dem Salzbad abtropfen gelassen (z.B. für etwa 24 h), und dann unter Luftabschluss reifen gelassen, z.B. in Folie eingeschweißt. Dabei kann eine Reifung für ca. 20-60 Tage bevorzugt bei Temperaturen unter Raumtemperatur (20°C), z.B. bei 10-15°C erfolgen, z.B. 25-40 Tage oder ca. 30 Tage bei 10-15°C. Eine weitere Lagerung, bevorzugt bei ca. 4-15°C oder 4-8°C ist möglich.

Die Herstellung kann auch verschiedene andere Verfahren zum Oberflächenschutz, z.B. die Entwicklung einer Käserinde, Aufbringen einer Schutzschicht aus Käse-Coating, Wachs oder Paraffin und/oder das Verpacken in Folie umfassen. Käse, auch Salzlakenkäse, kann auch z.B. in Öl, z.B. Olivenöl, ggf. mit Gewürzen, eingelegt und verpackt werden.

Von besonderem Vorteil ist bei der erfindungsgemäßen Verwendung oder dem erfindungsgemäßen Verfahren, dass die Lipase bei der Käseherstellung ein Aroma erzeugt, wobei das Aroma bevorzugt charakterisiert ist durch das Vorhandensein der freien Fettsäuren Capronsäure (n-Hexansäure), Caprylsäure (n-Octansäure) und Caprinsäure (n-Decansäure) sowie Essigsäure und Buttersäure (n-Butansäure). Carbonsäuren wie Capronsäure, Caprylsäure, Caprinsäure zeichnen sich durch einen bockartigen Geruch aus und sind daher besonders geeignet zur Herstellung von scharfen, pfeffrigen, pikanten Aromen wie es beispielsweise für Salzlakenkäse wie Feta, Bergkäse, Provolone, Parmesan und ähnliche aromatische Käse gewünscht ist.

Ein Gegenstand der Erfindung ist auch ein Verfahren zur Herstellung einer von einem Basidiomyceten abgeleiteten erfindungsgemäßen Lipase aus einer Basidiomyceten-Kultur, das Kultur eines Basidiomyceten in einem Medium (bevorzugt Malzextraktpepton-Medium), umfassend einen Induktor zur Steigerung der Sekretion von Lipasen, und Isolierung des die Lipasen umfassenden Kulturüberstandes, sowie Reinigung der Lipase umfasst
Bevorzugt umfasst das Verfahren die folgenden Schritte:
a) Kultur eines Basidiomyceten in einem Medium (bevorzugt Malzextraktpepton-Medium), umfassend einen Induktor zur Steigerung der Sekretion von Lipasen,
b) Isolierung des die Lipasen umfassenden Kulturüberstandes,
c) Proteinfällung,
d) Konzentrierung, und
e) Reinigung der Lipase.

Schritte c-e können hierbei in jeder Reihenfolge oder gleichzeitig durchgeführt werden. Bevorzugt werden die Schritte in der beschriebenen Reihenfolge a)-e) durchgeführt.

Die Kultur des Basiodiomyceten kann in einem geeigneten Medium erfolgen, z.B. Malzextraktpepton-Medium, Standardnährlösung (SNL) oder Kartoffel-Glucose-Medium. Bevorzugt erfolgt die Kultur in Malzextraktpepton-Medium. Die Kultur kann z.B. auf einem Schüttler (z.B. 150 rpm) bei Lichtausschluss bei ca. 20-30°C, bevorzugt ca. 24-25°C erfolgen. Ein geeigneter Zeitraum kann z.B. 10-30 Tage oder 20-21 Tage sein. Eine Vorkultur ohne Zugabe des Induktors ist möglich.

Der Induktor zur Steigerung der Sekretion von Lipasen umfasst Triglyceride, bevorzugt aus Milchprodukten, oder Triglyceride, die auch in Milchprodukten vorkommen. Als Induktor können z.B. Butterschmalz, Butter oder Quarkfett eingesetzt werden, bevorzugt Quarkfett und Butterschmalz, insbesondere Quarkfett.

Die Isolierung des die Lipasen umfassenden Kulturüberstandes kann z.B. nach Sedimentierung oder Zentrifugation oder durch Filtrierung erfolgen.

Erfindungsgemäß kann die Proteinfällung eine Fällung mit Ammoniumsulfat oder Ethanol sein, bevorzugt eine Ammoniumsulfatfällung. Es kann z.B. mit 60 oder 70% Ammoniumsulfat gefällt werden, wobei das gefällte Protein weiter aufgearbeitet wird. Optional wird eine fraktionierte Fällung durchgeführt.

Eine Konzentrierung, Umpufferung oder ein Entsalzen kann z.B. durch Zentrifugation mit einem Filter durchgeführt werden, z.B. mit einer Ausschlussgröße (MWCO; molecular weight cut-off) von 10-30 kDa, bevorzugt 10 kDa, z.B. mittels Vivaflow-Filter. Beispielsweise kann eine Abtrennung von Bestandteilen, die mehr als 300 kDa groß sind, durch eine erste Filtration mit einem Filter mit MWCO von 300 kDa durchgeführt werden, gefolgt von einer oder mehreren weiteren Filtrationsschritten mit Filter mit geringerem MWCO zur Konzentrierung, beispielsweise 100, 50, 30, 10 kDa. Besonders bevorzugt findet der letzte Filtrationsschritt mit einem Filter mit einer MWCO von 10 kDa statt.

In einem erfindungsgemäßen Verfahren kann die Reinigung oder Isolierung mehrere, bevorzugt mindestens zwei (z.B. drei oder vier oder fünf) Schritte umfassen.

Ein bevorzugter Schritt ist eine Ionenaustauschchromatographie (IEX), z.B. Anionenaustauschchromatographie (AEX) oder Kationenaustauschchromatographie (CEX), und/oder Größenausschlusschromatographie (SEC). Dieser Schritt kann z.B. per FPLC (Fast Protein Liquid Chromatography) durchgeführt werden, etwa mit einer Diethylaminoethyl -Matrix, z.B. mit einer DEAE Sepharose *Fast Flow* Säule (DEAE-FF). Es können auch mehrere Ionenaustauschchromatographien durchgeführt werden.

Ein weiterer bevorzugter Schritt der Isolierung kann z.B. Größenausschlusschromatographie sein, z.B. als zweiter Schritt nach einer Ionenaustauschchromatographie.

Bevorzugt umfasst das erfindungsgemäße Verfahren zur Herstellung einer von einem Basidiomyceten abgeleiteten Lipase die Kultur des Basidiomyceten (z.B. *Pleurotus citrinopileatus* oder *Flammulina velutipes*), Isolierung des Kulturüberstands, eine Proteinfällung, z.B. mit Ammoniumsulfat, Konzentrierung, IEX (bevorzugt AEX) und SEC, optional eine hydrophobe Interaktionschromatographie (HIC). Die Reihenfolge der Schritte kann auch geändert werden.

Vorteilhafterweise werden bei den erfindungsgemäßen Aufreinigungsverfahren jeweils Fraktionen mit hoher Esterase-/Lipase-Aktivität ausgewählt. Die Esterase-/Lipase-Aktivität der erfindungsgemäßen Lipasen können mit im Stand der Technik bekannten Esterase-/Lipaseassays bestimmt werden, z.B. mit dem Esteraseassay nach Purdy und Kolattukudy, 1973 (Purdy und Kolattukudy 1973), oder dem Lipaseassay nach Winkler und Stuckmann, 1979, bevorzugt nach Purdy und Kolattukudy. Bevorzugte Esterase-/Lipase-Aktivitäten ausgewählter Fraktionen sind beispielsweise mindestens 70 U/L, mindestens 200 U/L, mindestens 300 U/L, mindestens 400 U/L oder mindestens 500 U/L.

In einer besonders bevorzugten Ausführungsform enthalten die Lipasen nach Durchführung der Aufreinigungsschritte des erfindungsgemäßen Verfahrens eine gegenüber dem Kulturüberstand im Verhältnis zur Esterase-/Lipase-Aktivität verringerte Peptidase-Aktivität, bevorzugt, keine signifikante Peptidase-Aktivität, d.h., was z.B. erreicht werden kann, indem Reinigungsverfahren ausgewählt werden, die Lipasen und Peptidasen voneinander trennen. Es können z.B. Fraktionen mit Peptidase-Aktivität verworfen werden. Dadurch kann ein eventuell durch vorhandene Peptidasen begründeter bitterer und seifiger Fehlgeschmack vermieden werden. Peptidase-Aktivität kann mittels Azocasein (Kilcawley et al. 2002) getestet werden.

In einer Ausführungsform stellt die Erfindung ein Verfahren zur Herstellung von Käse zur Verfügung, bei dem man nach dem hierin beschriebenen erfindungsgemäßen Verfahren eine von einem Basidiomyceten abgeleitete Lipase herstellt und dann diese Lipase bei einem erfindungsgemäßen Verfahren zur Herstellung von Käse einsetzt.

Ein anderer Gegenstand der Erfindung ist eine von einem Basidiomyceten abgeleitete, erfindungsgemäße Lipase, bevorzugt von einem hierin beschriebenen Basidiomyceten, z.B. *Pleurotus citrinopileatus* oder *Flammulina velutipes,* die bevorzugt in der Lage ist, eine oder mehrere der freien Fettsäuren aus der Gruppe bestehend aus Essigsäure, Buttersäure, Capronsäure, Caprylsäure und Caprinsäure aus Triglyceriden freizusetzen. Derartige Lipasen sind z.B. durch ein erfindungsgemäßes Verfahren erhältlich.

In einer Ausführungsform ist die Lipase von einem Basidiomyceten abgeleitet, z.B. aus *Flammulina velutipes.* Im Stand der Technik ist die Peptidsequenz einer *Putative carotinoid ester lipase* (Uniprot Zugriffsnummer G8A515 aus *Flammulina velutipes* bekannt, welche 725 Aminosäuren umfasst (SEQ ID NO: 1), Molekulargewicht 79 kDa. Eine Funktion des Proteins war im Stand der Technik nicht bekannt.

In einer Ausführungsform weist die erfindungsgemäße Lipase aus *Flammulina velutipes* 250-725 Aminosäuren auf. Optional hat sie weniger als 725 Aminosäuren, insbesondere weniger als 500 Aminosäuren.

Bei Analyse der im Lipase-Assay aktiven Fraktionen aus *Flammulina velutipes* mit halb-nativem SDS-PAGE mit Esterasefärbung wurde gefunden, dass die aktivsten Proteine bei ca. 30-40 kDa nachzuweisen waren. Weitere aktive Proteine fanden sich bei ca. 60-70 kDa.

In einer Ausführungsform hat die erfindungsgemäße Lipase aus *Flammulina velutipes* daher ein Molekulargewicht von weniger als 79 kDa, insbesondere 25-45 kDa, bevorzugt von 30-40 kDa aufweist, besonders bevorzugt von 32-38 kDa. In einer anderen Ausführungsform ist das Molekulargewicht ca. 60-70 kDa. Es kann auch eine Zusammensetzung mit einer eine Mischung verschiedener Formen vorliegen. In einer Ausführungsform haben die Lipasen in einer solchen Mischung zu mehr als 50%, bevorzugt zu mehr als 80% ein Molekulargewicht von ca. 25-45 kDa.

Bei der Sequenzierung wurden Fragmente der Lipase aus ca. Aminosäurepositionen 80-420 der oben genannten *Putative carotinoid ester lipase* gefunden. In einer Ausführungsform umfasst die Lipase eine Aminosäuresequenz, die mindestens 80%, bevorzugt mindestens 85%, mindestens 90% oder mindestens 95%, z.B. 100% Identität mit einer Sequenz von SEQ ID NO:2 aufweist, wobei die Lipase von einem Basidiomyceten abgeleitet ist, z.B. aus *Flammulina velutipes.* Besonders bevorzugt weist die Lipase nicht 90% der Sequenz von SEQ ID NO: 1 oder mehr, insbesondere nicht die vollständige Sequenz von SEQ ID NO: 1 auf.

Es kann jedoch auch eine Lipase, welche eine Aminosäuresequenz umfasst, die mindestens 80%, bevorzugt mindestens 85%, mindestens 90% oder mindestens 95%, oder 100% Identität mit einer Sequenz von SEQ ID NO:1 aufweist, zur Herstellung von Käse (bevorzugt Salzlakenkäse oder einem anderen aromatischen Käse), z.B. mit dem erfindungsgemäßen Verfahren, verwendet werden, wobei die Lipase von einem Basidiomyceten abgeleitet ist, z.B. aus *Flammulina velutipes.*

Nach Sequenzierung der genomischen DNA von aus *Flammulina velutipes* mit aus isolierten Fragmenten abgeleiteten Primern wurde eine von SEQ ID NO: 1 unterschiedliche Sequenz gefunden, nämlich SEQ ID NO: 14. In einer bevorzugten Ausführungsform stellt die Erfindung damit eine Lipase bereit, welche mindestens 98% Sequenzidentität, bevorzugt mindestens 99%, mindestens 99,5% oder 100% Sequenzidentität mit SEQ ID NO: 14 aufweist oder entsprechende Sequenzen umfasst. Alternativ kann eine Lipase eingesetzt werden, die ein mindestens 30 kDa großes Fragment eines Proteins ist, das mindestens 98% Sequenzidentität, bevorzugt mindestens 99%, mindestens 99,5% oder 100% Sequenzidentität mit SEQ ID NO: 14 aufweist. Bevorzugt weist das Fragment mindestens 80% Identität mit einer Sequenz von SEQ ID NO:2 auf.

In einer Ausführungsform weist eine erfindungsgemäße Lipase mindestens 99,5% Sequenzidentität zu SEQ ID NO: 17 auf, bevorzugt umfasst sie SEQ ID NO: 17. SEQ ID NO: 17 ist ein Fragment von SEQ ID NO: 14, welches gegenüber SEQ ID NO: 2 zwei Aminosäuresubstitutionen aufweist. Selbstverständlich kann eine solche Lipase gegenüber SEQ ID NO: 17 auch N- oder C-terminal länger sein, es wird jedoch angenommen, dass nicht der gesamte C-Terminus von SEQ ID NO: 14 für die Funktion des Proteins nötig ist.

Ein erfindungsgemäßes Lipasefragment kann optional als Fusionsprotein exprimiert werden, z.B. mit einer Aminosäuresequenz, welche die Aufreinigung erleichtert, wie einem His-Tag.

Eine erfindungsgemäße Lipase mit SEQ ID NO: 14 kann von genomischer DNA mit SEQ ID NO: 15 oder cDNA mit SEQ ID NO: 16 kodiert werden. Auch eine für die Expression in einem Wirtsorganismus codonoptimierte cDNA, welche für eine Lipase mit SEQ ID NO: 14 kodiert, ist Gegenstand der Erfindung. Ebenfalls wird eine Nukleinsäure, z.B. ein Expressionsvektor bereitgestellt, welche für eine Lipase mit mindestens 99,5% Sequenzidentität zu SEQ ID NO: 17 kodiert, bevorzugt für eine Lipase mit SEQ ID NO: 17.

Es wird ferner ein Expressionsvektor bereitgestellt, der für eine Lipase kodiert, welche mindestens 98% Sequenzidentität, bevorzugt mindestens 99%, mindestens 99,5% oder 100% Sequenzidentität mit SEQ ID NO: 14 aufweist oder entsprechende Sequenzen umfasst, oder ein Fragment dieses Proteins ist, wobei das Fragment bevorzugt mindestens 80% Identität mit einer Sequenz von SEQ ID NO:2 aufweist. Ein solcher Expressionsvektor kann z.B. die cDNA nach SEQ ID NO: 16 oder ein Fragment davon umfassen.

Der Begriff, dass die Lipase von einem Basidiomyceten abgeleitet ist, schließt Mutationen nicht aus, es kann sich also um Homologe der Lipase mit SEQ ID NO: 1 aus anderen Basidiomyceten (z.B. *Flammulina spp*.), ggf. in mutierter Form, oder mutierte Formen der Lipase aus *Flammulina velutipes* handeln, z.B. mit einem, zwei oder drei Aminosäureaustausch, bevorzugt außerhalb des Bereichs von SEQ ID NO: 2.

Die erfindungsgemäße Lipase ist optional, bevorzugt aber dann, wenn die Lipase SEQ ID NO: 1 aufweist, an eine Aminosäuresequenz gekoppelt, die die Aufreinigung erleichtert, z.B. ein His-Tag. Zusätzlich oder alternativ wurde die erfindungsgemäße Lipase in gentechnisch veränderten Organismen hergestellt, so dass sie ein anderes Glykosylierungsmuster aufweisen kann als bei Reinigung aus einem Basidiomyceten.

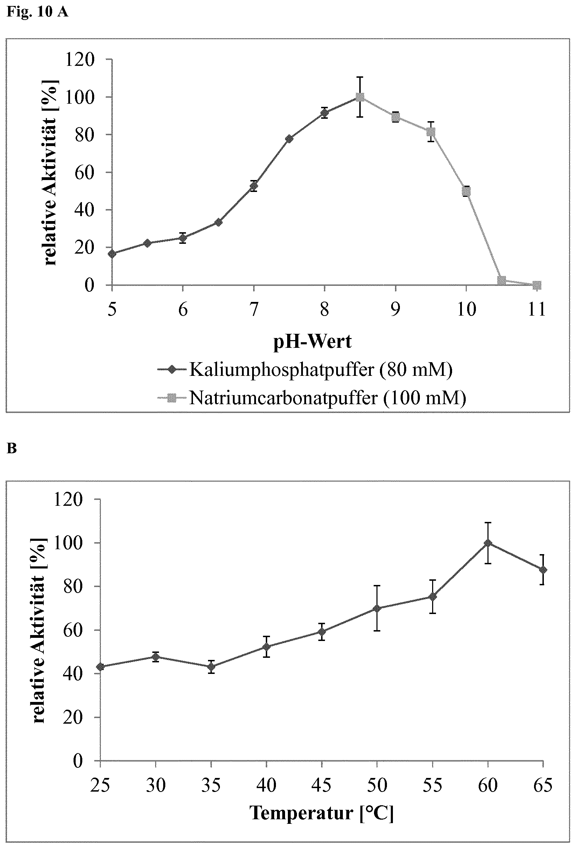

Eine erfindungsgemäße Lipase kann die in Fig. 10 dargestellten Temperatur- und pH-Optima aufweisen.

In einer Ausführungsform ist die Lipase von einem *Pleurotus citrinopileatus* abgeleitet. Bei Analyse der im Lipase-Assay aktiven Fraktionen aus diesem Basidimyceten mit halb-nativem SDS-PAGE mit Esterasefärbung wurde gefunden, dass die aktivsten Proteine bei ca. 30-40 kDa nachzuweisen waren. Weitere aktive Proteine fanden sich bei ca. 80-95 kDa.

Bevorzugt hat die erfindungsgemäße Lipase aus *Pleurotus citrinopileatus* daher ein Molekulargewicht von 25-45 kDa, bevorzugt von 30-40 kDa aufweist, besonders bevorzugt von 32-38 kDa. In einer anderen Ausführungsform ist das Molekulargewicht ca. 80-95 kDa oder es liegt eine Mischung dieser beiden Formen vor. In einer Ausführungsform hat die Lipase zu mehr als 50%, bevorzugt zu mehr als 80% ein Molekulargewicht von ca. 25-45 kDa. In einer Ausführungsform umfasst die Lipase eine Sequenz mit einer Aminosäureidentität von mindestens 40%, bevorzugt mindestens 60% oder mindestens 80% zu SEQ ID NO: 2.

Homologe der erfindungsgemäßen Lipasen aus anderen Basidiomyceten, insbesondere den hierin genannten Gattungen und Familien, lassen sich durch den Fachmann isolieren und auf ihre Aktivität, insbesondere bei der Herstellung von Käse mit einem gewünschten Aroma-Profil testen. Das gewünschte Aroma-Profil kann durch die Fettsäuren Capronsäure, Caprylsäure und Caprinsäure sowie an Buttersäure und Essigsäure und ein dadurch verliehenes bockiges Aroma charakterisiert sein, es kann jedoch auch ein anderes Profil gewünscht sein.

Ein Gegenstand der Erfindung ist auch ein Expressionsvektor, der eine erfindungsgemäße Lipase, z.B. aus *Flammulina velutipes* kodiert, wobei die kodierende Sequenz mit geeignetem Promotor für Expression in einer Wirtszelle funktionell gekoppelt ist. Gegenstand der Erfindung ist auch einen solchen Expressionsvektor umfassende transformierte Wirtszelle, wobei die Wirtszelle ausgewählt ist aus der Gruppe umfassend Bakterien, z.B. *E. coli* und Hefe, z.B. *S*. *cerevisiae* oder *P. pastoris.*

Ein anderer Gegenstand der Erfindung betrifft ein Verfahren zur Herstellung einer von Basidiomyceten abgeleiteten erfindungsgemäßen Lipase, das die folgenden Schritte umfasst:
a) Kultivieren der erfindungsgemäßen Wirtszelle, und
b) Isolieren der Lipase aus der Kultur.

Die vorliegende Erfindung betrifft auch einen Käse, welcher eine von einem Basidiomyceten abgeleitete, erfindungsgemäße Lipase umfasst, z.B. aus *Flammulina velutipes* oder *Pleurotus citrinopileatus.* Es wird auch ein Käse zur Verfügung gestellt, erhältlich durch ein erfindungsgemäßes Verfahren, wobei der Käse bevorzugt freie Fettsäuren aus der Gruppe bestehend aus Capronsäure, Caprylsäure und Caprinsäure sowie Buttersäure und Essigsäure und optional eine von einem Basidiomyceten abgeleitete erfindungsgemäße Lipase umfasst.

Bevorzugt kann der Käse nach angemessener Reifung (z.B. 30 Tage bei 13 °C und 8-12 Wochen, insbesondere 12 Wochen bei 4 °C) per GC/MS/MS nachweisbare Mengen an Capronsäure, Caprylsäure und Caprinsäure sowie an Buttersäure und Essigsäure umfassen.

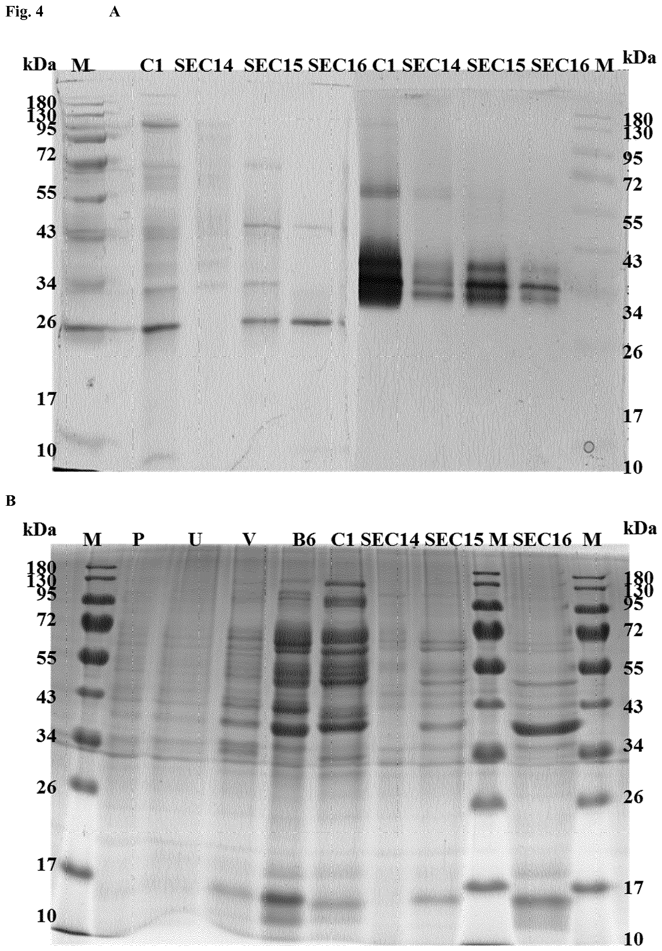

In einer Ausführungsform umfasst der Käse, hergestellt mit der Lipase aus *Pleurotus citrinopileatus,* dabei mehr Caprylsäure als Capronsäure und Caprinsäure, wobei die Mengen an Capronsäure und Caprinsäure ungefähr gleich sind (+/-10%). Dabei ist die Menge an Essigsäure bevorzugt 50-90% geringer als die Menge an Buttersäure. Bevorzugt ergibt sich im SPME-GC-MS/MS-Chromatogramm ein Chromatogramm entsprechend Fig. 4B-E).

In einer Ausführungsform umfasst der Käse, hergestellt mit der Lipase aus *Flammulina velutipes,* dabei mehr Capronsäure als Caprylsäure und Caprinsäure, wobei die Menge an Caprinsäure größer ist als die an Capronsäure. Dabei ist die Menge an Essigsäure 0-50% geringer als die Menge an Buttersäure. Bevorzugt ergibt sich im SPME-GC-MS/MS-Chromatogramm ein Chromatogramm entsprechend Fig. 4B-E).

### LEGENDE

**Fig. 1** zeigt die im Kulturüberstand von *Pleurotus citrinopileatus* Kulturen gemessenen Esterase-/Lipase-Aktivitäten zu den angegebenen Zeitpunkten bei Kultur in MEP-Medium (A), in MEP-Medium mit 0,5% Butterschmalz **(B)** und MEP-Medium mit 0,05% Fett aus Quark **(C).** Substrate para-Nitrophenylacetat (pNPA), -butyrat (pNPB), -valerat (pNPV), -hexanoat (pNPH), -octanoat (pNPO) und -palmitat (pNPP)
**Fig. 2** zeigt die gemessene Esterase-Aktivität im Kulturüberstand vor Aufreinigung und die Esterase-Aktivität der aus den Kulturen von *Flammulina velutipes* **(A)** und *Pleurotus citrinopileatus* **(B)** hergestellten Lipase zur Verwendung in der Käseherstellung
**Fig. 3** zeigt die Esterase-Aktivitäten verschiedener FPLC-Fraktionen des Kulturüberstandes von *Flammulina velutipes* nach der ersten Aufreinigungsstufe mittels DEAE-FF **(A)** und nach der zweiten Aufreinigungsstufe von Fraktion C1 mittels SEC **(B)**
**Fig. 4** zeigt die SDS-PAGE Analyse verschiedener Fraktionen von *Flammulina velutipes* nach Aufreinigung mit FPLC.
   **(A)** Halbnative SDS-PAGE (Marker (M), Fraktion C1 nach DEAE-FF (C1), Fraktion 14 nach SEC (SEC14), Fraktion 15 nach SEC (SEC15) und Fraktion 16 nach SEC (SEC16); Coomassie-Färbung links; Esterase-Färbung rechts).
   **(B)** Denaturierende SDS-PAGE (Marker (M), Pellet (P), Ultrasette (U), Konzentrat nach Vivaflow (V), Fraktion B6 nach DEAE-FF (B6), Fraktion C1 nach DEAE-FF (C1), Fraktion 14 nach SEC (SEC14), Fraktion 15 nach SEC (SEC15) und Fraktion 16 nach SEC (SEC16); Coomassie-Färbung)

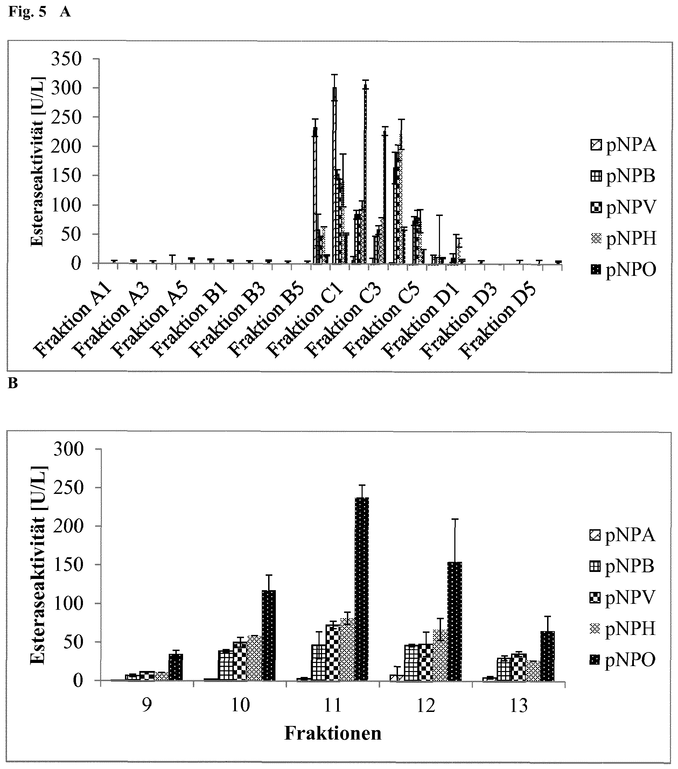

**Fig. 5** zeigt die Esterase-Aktivitäten verschiedener FPLC-Fraktionen des Kulturüberstandes von *Pleurotus citrinopileatus* nach der ersten Aufreinigungsstufe mittels DEAE-FF **(A)** und nach der zweiten Aufreinigungsstufe von Fraktion C2 und C3 mittels SEC **(B).**

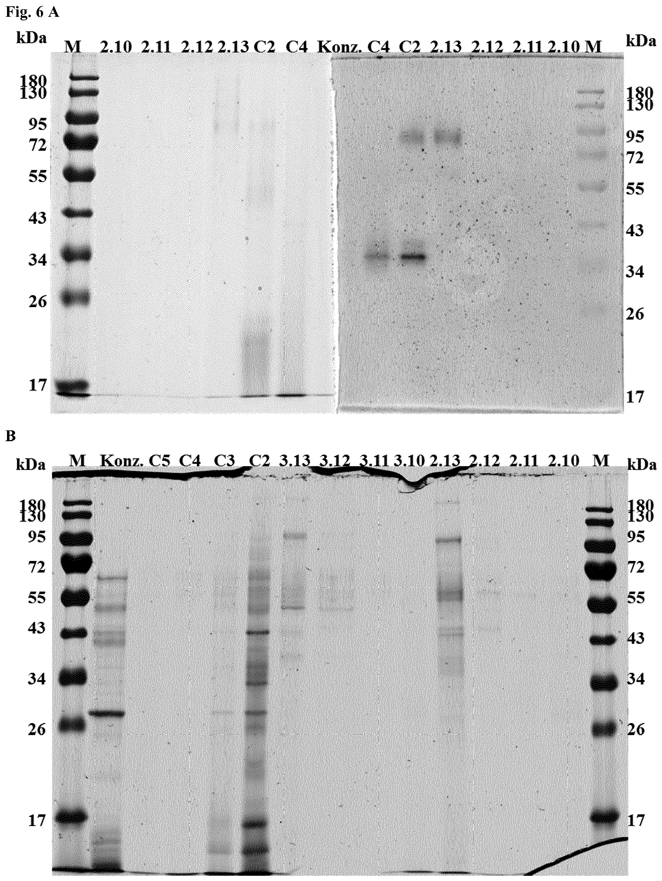

**Fig. 6** zeigt die SDS-PAGE Analyse verschiedener Fraktionen von *P. citrinopileatus* nach Aufreinigung mit FPLC.
   **(A)** Halbnative SDS-PAGE (Marker (M), Fraktion 10 nach SEC (2.10), Fraktion 11 nach SEC (2.11), Fraktion 12 nach SEC (2.12), Fraktion 13 nach SEC (2.13), Fraktion C2 nach DEAE-FF (C2), Fraktion C4 nach DEAE-FF (C4) und Konzentrat nach Vivaflow (Konz.); Coomassie-Färbung links und Esterase-Färbung rechts).
   **(B)** Denaturierende SDS-PAGE (Marker (M), Konzentrat nach Vivaflow (Konz.), Fraktion C5 nach DEAE-FF (C5), C4 nach DEAE-FF (C4), C3 nach DEAE-FF (C3), C2 nach DEAE-FF (C2), Fraktion 13 (3.13 nach SEC von C3), Fraktion 12 (3.12 nach SEC von C3), Fraktion 11 (3.11 nach SEC von C3) und Fraktion 10 (3.10 nach SEC von C3), Fraktion 13 (2.13 nach SEC von C2), Fraktion 12 (2.12 nach SEC von C2), Fraktion 11 (2.11 nach SEC von C2) und Fraktion 10 (2.10 nach SEC von C2), Marker (M); Coomassie-Färbung)

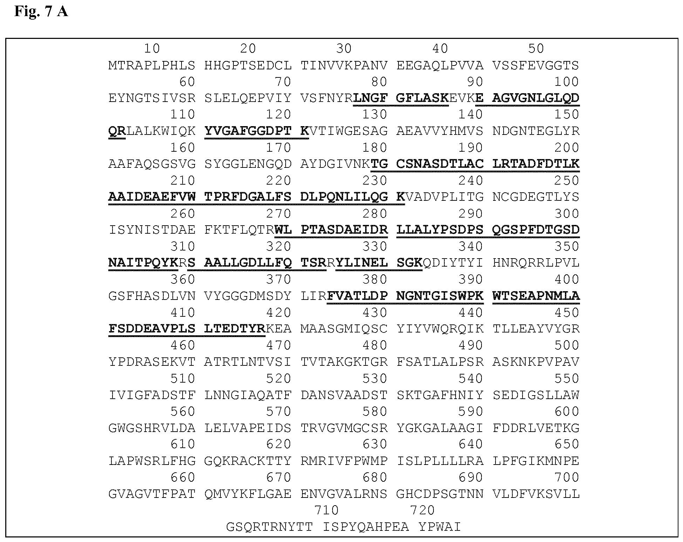

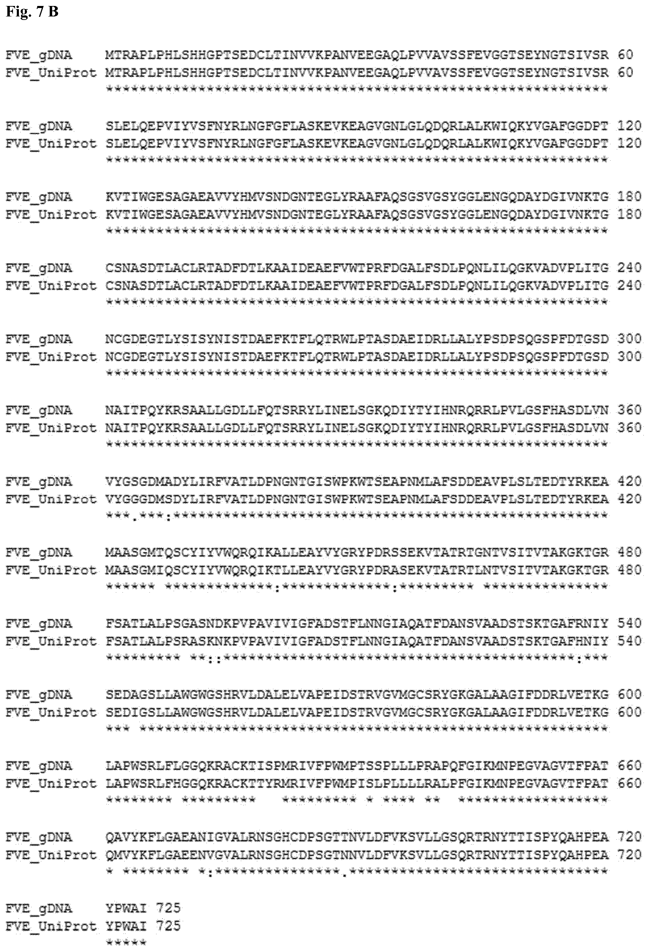

**Fig. 7** zeigt die Peptidsequenz einer *Putative carotenoid ester lipase* (UniProt Zugriffsnummer G8A515) aus *F. velutipes* (SEQ ID NO: 1). Gefundene ESI-MS/MS Peptidfragmente sind unterstrichen und fettgedruckt dargestellt **(A).** Nach Herstellung von Primern auf dieser Basis und Sequenzierung der genomischen DNA (SEQ ID NO: 15) wurde die Aminosäuresequenz einer neuen Lipase aus *F. velutipes* (SEQ ID NO: 14, gDNA) identifiziert, die in **(B)** mit SEQ ID NO: 1 (UniProt) verglichen ist. Es zeigt sich auf Aminosäureebene eine Abweichung von mehr als 3% zu der *Putative carotenoid ester lipase* (UniProt Zugriffsnummer G8A515).

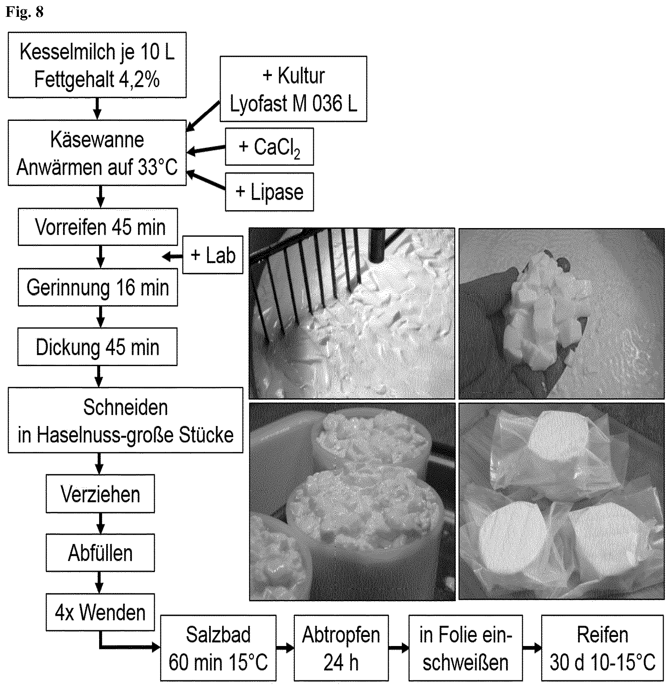

**Fig. 8** zeigt einen beispielhaften Ablauf eines erfindungsgemäßen Käsereiprozesses.

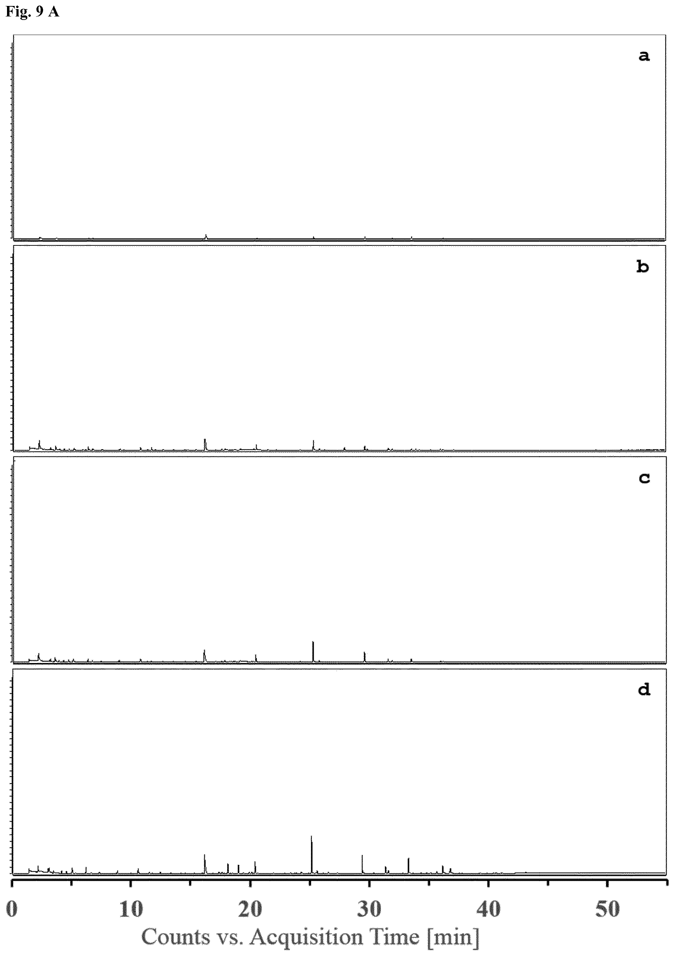

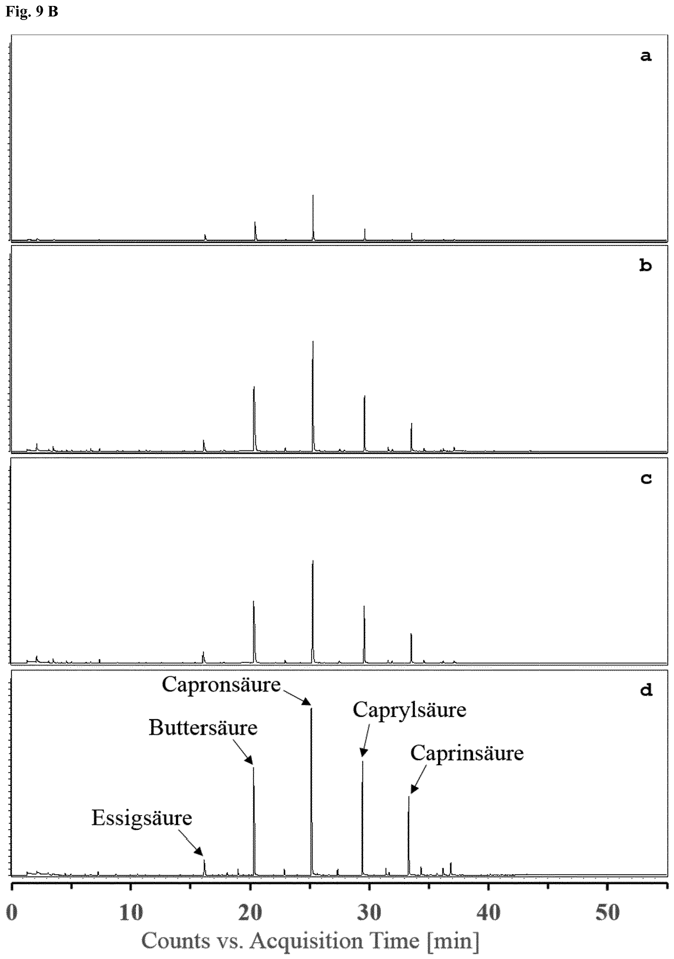

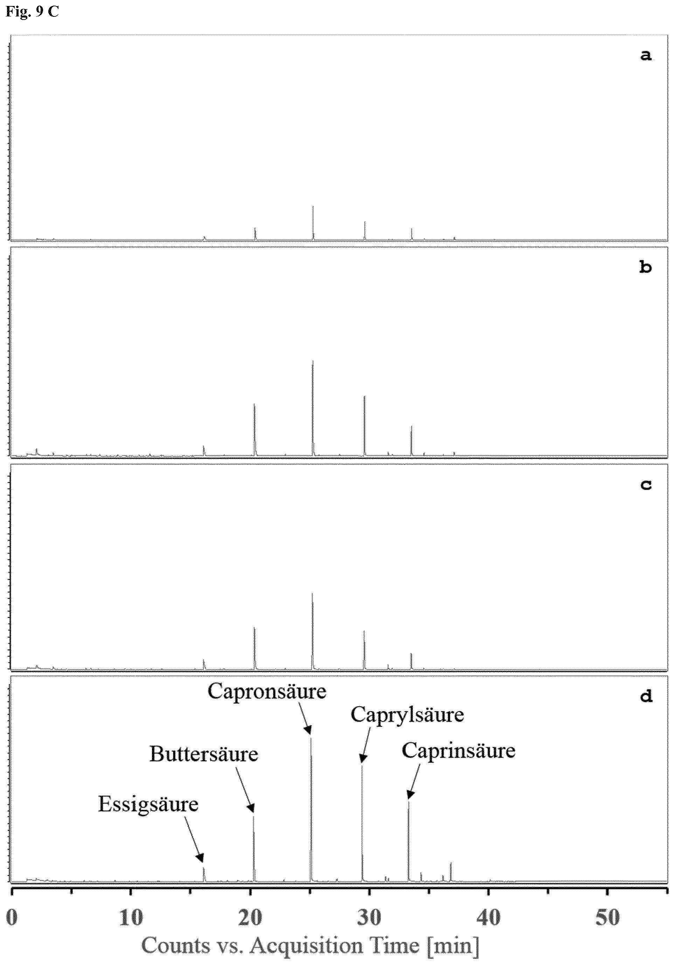

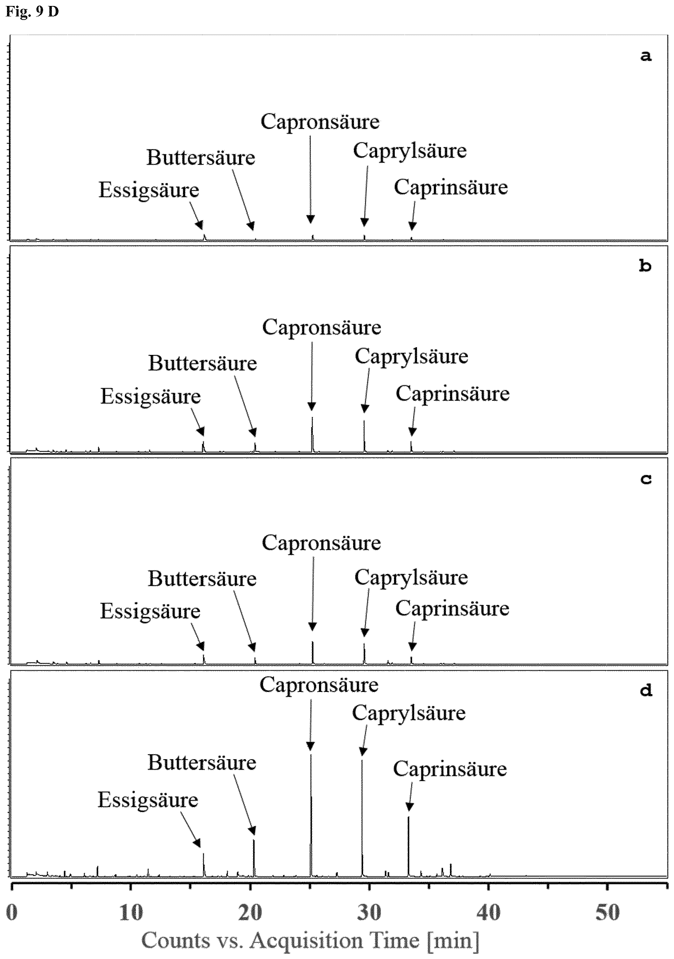

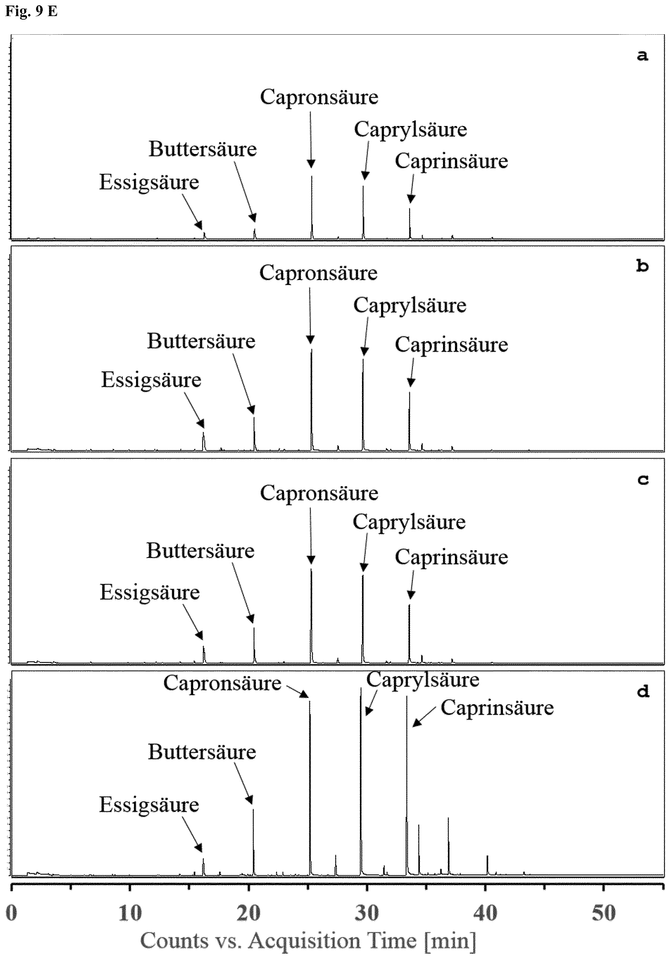

**Fig. 9** zeigt SPME-GC-MS/MS Chromatogramme von Testkäse-Proben nach Lagerung für 30 Tage bei 13 °C (a), für 30 Tage bei 13 °C + 4 Wochen bei 4 °C (b); für 30 Tage bei 13 °C + 8 Wochen bei 4 °C (c) und 30 Tage bei 13 °C + 12 Wochen bei 4 °C (d), hergestellt ohne Lipase **(A)**, mit opti-zym z10uc **(B),** mit Piccantase **(C),** mit Lipase von *Flammulina velutipes* **(D)** und mit Lipase von *Pleurotus citrinopileatus* **(E).**
**Fig. 10** zeigt den mittels Esteraseassay (pNPH) ermittelten optimalen pH-Wert der erfindungsgemäßen Lipase von *F. velutipes* nach Aufreinigung mit FPLC (Beispiel 3) **(A)**, wobei der optimale pH-Wert bei ca. 7-10 liegt, bevorzugt bei 8-9,5 oder bei ca. 8,5; und die mittels Esteraseassay (pNPH) ermittelte optimale Temperatur der erfindungsgemäßen Lipase von *F. velutipes* nach Aufreinigung mit FPLC **(B)**, wobei die optimale Temperatur bei ca. 50-70°C liegt, bevorzugt bei 55-65°C oder ca. 60°C.

### BEISPIELE

### Beispiel 1: Kulturführung

### Stammhaltung

Die verwendeten Basidiomyceten-Pilzstämme wurden auf Malzextraktpepton-Agarplatten (MEPA) kultiviert. Zur Herstellung der Platten wurden die Medienbestandteile (Agar Agar 15 g, Malzextrakt 30 g, Sojaprotein 3 g) eingewogen, mit Reinstwasser ad 1 L aufgefüllt, mit 1 M NaOH auf pH 5,6 eingestellt und für 20 min bei 121 °C autoklaviert.

Auf die Agarplatten wurde mit einem sterilen Spatel mittig ein 1 cm² großes, homogen mit Pilzmycel bewachsenes Agarstück aufgesetzt, die Petrischale mit Parafilm verschlossen und bei 24 °C im Brutschrank inkubiert. Die zu ca. 80 % bewachsenen Agarplatten wurden anschließend bei 4 °C gelagert und regelmäßig nach gleichem Verfahren überimpft.

### Vorkultur

Für die Vorkulturführung wurde Malzextraktpepton-Medium verwendet. Dazu wurden die einzelnen Medienbestandteile (30 g Malzextrakt, 3 g Sojaprotein) eingewogen, mit 1 M NaOH auf pH 5,6 eingestellt und ad 1 L aufgefüllt. Je 100 mL des Mediums wurden in 250 mL Erlenmeyerkolben überführt und mit einem Cellulosestopfen sowie Alufolie verschlossen. Die Sterilisation der Medien erfolgte für 20 min bei 121 °C im Autoklaven.

Ein ca. 1 cm² großes, homogen bewachsenes Agarstück wurde mit Hilfe eines sterilen Spatels in 100 mL des Malzextraktpepton-Mediums überführt und mittels Ultra-Turrax-Dispergiergerät für 30 s bei 10.000 U*min⁻¹ homogenisiert. Die Vorkultur wurde unter Lichtausschluss bei 24 °C im Inkubationsschüttler (150 rpm) inkubiert. Die Vorkulturdauer erfolgte nach Beobachtung der Wachstumsdauer auf der MEPA-Agarplatte.

### Hauptkultur

Die Hauptkulturführung erfolgte in Malzextrakpepton-Nährmedium. Je 100 mL Medium wurden in 250 mL Erlenmeyerkolben überführt, mit einem Cellulosestopfen und Alufolie verschlossen und autoklaviert (20 min, 121 °C). Nach dem Homogenisieren der Vorkultur mittels Ultra-Turrax-Dispergiergerät (30 s, 10.000 U*min-1) wurden für die Hauptkultur jeweils 10 mL der Vorkultur (10% des Hauptkulturmediums) in einen der 250-mL-Erlenmeyerkolben überführt. Die Kulturen wurden auf einem Schüttler unter Lichtausschluss bei 24 °C und 150 rpm 21 Tage lang inkubiert.

### Probennahme

In regelmäßigen Abständen wurden steril Proben entnommen und die Esterase-/Lipase-Aktivität mittels photometrischer Assays bestimmt. Dazu wurde jeweils 1 mL Probe aus der Submerskultur entnommen und zentrifugiert (14.000 rpm, 18.000 g, 5 min, 4 °C). Der Überstand wurde abgetrennt und für die jeweiligen Assays eingesetzt.

### Kulturernte

Die Ernte der Submerskulturen erfolgte am Tag des Aktivitätsmaximums des jeweiligen Basidiomyceten mittels Filtration über einen Büchnertrichter; dabei wurde der Kulturüberstand in einer Saugflasche aufgefangen und bis zur Weiterverarbeitung bei -20 °C eingefroren. Das Myzel wurde verworfen.

### Optimierung der Medienzusammensetzung

Zur Optimierung der Enzymexpression wurden verschiedene Nährmedien getestet: Malzextraktpepton-Medium (MEP), Standardnährlösung (SNL) und Kartoffel-Glucose-Medium. Die verwendeten Stämme wiesen in den verschiedenen Medien Unterschiede im Wachstum sowie in der Färbung des Mediums auf. Anhand der ermittelten Esterase-/Lipase-Aktivitäten in den Kulturüberständen der verschiedenen Medien wurde das Malzextraktpepton-Medium als das am besten geeignete Medium ausgewählt.

### Zusatz geeigneter Induktoren zur Steigerung der Sekretion extrazellulärer Lipasen/Esterasen

Nachdem sich das Malzextraktpepton-Medium als geeignetes Nährmedium erwiesen hatte, wurden diesem Medium verschiedene Induktoren zur Steigerung der Sekretion extrazellulärer Lipasen zugesetzt. Bei den Induktoren handelte es sich um Fett aus Quark (extrahiert nach Weibull-Stoldt aus Speisequark: 50% Fett i. Tr.), Butterschmalz und Butter (deutsche Markenbutter, mild gesäuert) (Matissek et al. 2014).

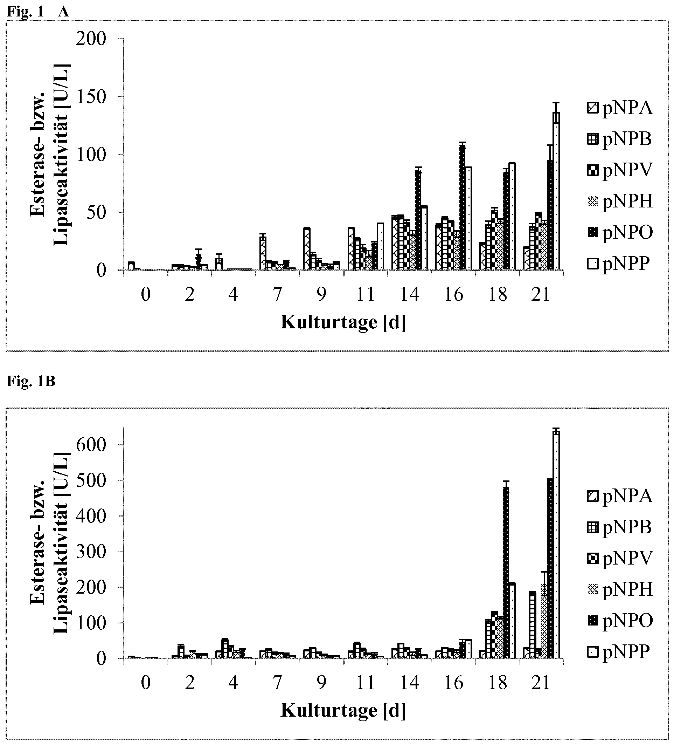

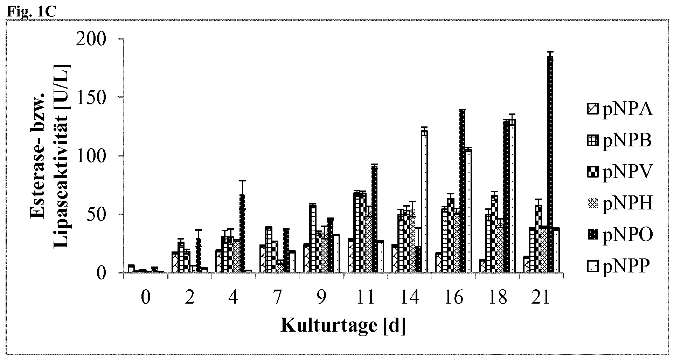

Die sekretierten Esterase-/Lipase-Aktivitäten wurden durch den Zusatz von Butterschmalz und Fett aus Quark signifikant gesteigert, insbesondere bei *Pleurotus citrinopileatus* (Fig. 1).

### Beispiel 2: Photometrische Enzymassays

Die Esteraseaktivität wurde mittels Esteraseassay nach Purdy und Kolattukudy, 1973 anhand der Umsetzung der fünf Substrate para-Nitrophenylacetat (pNPA), -butyrat (pNPB), -valerat (pNPV), -hexanoat (pNPH) und -octanoat (pNPO) bestimmt. Die Bestimmung der Lipaseaktivität erfolgte mit nach dem Lipaseassay nach Winkler und Stuckmann, 1979, mit dem Substrat p-Nitrophenylpalmitat (pNPP). Zur Bestimmung der Peptidaseaktivität wurde der Azocaseinassay nach Kilcawely et al. (2002) durchgeführt.

### Beispiel 3: Reinigung und Konzentrierung von Lipasepräparationen

### Proteinpräzipitation: Proteinfällung mit Ammoniumsulfat

Der jeweilige Kulturüberstand der verschiedenen Basidiomyceten wurde in ein Becherglas überführt und in einem Eisbad unter Rühren mit einer definierten Menge Ammoniumsulfat versetzt. Die Zugabe des Salzes erfolgte in regelmäßigen Abständen in kleinen Portionen. Sobald das Ammoniumsulfat vollständig in Lösung gegangen war, wurde bis zur Einstellung des Gleichgewichts für weitere 2 h gerührt. Anschließend wurden die gefällten Proteine abzentrifugiert (4.000 rpm, 3.283 g, 30 min, 4 °C). Das erhaltene Pellet wurde in einem definierten Volumen Reinstwasser bzw. Puffer aufgenommen und gelöst. Die eingestellte Ammoniumsulfatsättigung zur Proteinfällung betrug 60 % bei *Pleurotus citrinopileatus* und 70 % bei *Flammulina velutipes.*

### Konzentrierung

Zur Konzentrierung, Umpufferung und zum Entsalzen wurden dem Volumen entsprechend Macrosep®-Microsep™- oder Nanosep®-Zentrifugationseinheiten (Pall, Dreieich) mit einer Ausschlussgröße (MWCO) von 10 kDa eingesetzt. Vor der ersten Verwendung wurden die Zentrifugationseinheiten jeweils dreimal mit Reinstwasser konditioniert, indem sie bei 4 °C und 4.000 rpm (3.283 g) zentrifugiert wurden.

Bestandteile, die größer als 300 kDa sind wurden mittels Ultrasette™ Lab Tangentialflussfiltrationskassette aus dem Kulturüberstand abgetrennt (Membraneinheit: Omega™ Membran (modifiziertes Polyethersulfon mit geringer Proteinbindung), mit Polyolefinsubstrat, separiert und unterstützt durch Polyester Screen und/oder Suspended Screen Channel)

Die Konzentrierung großer Kulturvolumina erfolgte mittels Vivaflow-200-Einheit (MWCO 10 kDa) mit einer Polyethersulfon-Membran. Die Anwendung sowie die Reinigung der Membran erfolgten nach den Angaben des Herstellers.

### Fast Protein Liquid Chromatography (FPLC)

Die Reinigung der zuvor gefällten Proteine erfolgte über zwei Aufreinigungsstufen mittels FPLC. Zur Zweistufenreinigung wurde die Ionenaustauschchromatographie (IEX) als erste Aufreinigungsstufe und die Größenausschlusschromatographie (SEC) als zweite Aufreinigungsstufe eingesetzt.

Als Laufmittel wurden zwei verschiedene Kaliumphosphatpuffer verwendet (Laufpuffer A, 50 mM, pH 7,0 und Laufpuffer B, 50 mM, pH 7,0 mit 1 M NaCl). Als Säule diente in einem ersten Reinigungsschritt eine Diethylaminoethyl Sepharose *Fast Flow* Säule (DEAE-FF). Dabei handelt es sich um einen schwachen Anionenaustauscher. In einem zweiten Reinigungsschritt wurden die aktivsten Fraktionen der DEAE-FF-Säule konzentriert und umgepuffert (s. 1.4.2) und mittels einer Größenausschlusschromatographie (SEC) gereinigt. Als Laufmittel wurde ein Kaliumphosphatpuffer (50 mM, pH 7,0 mit 0,15 M NaCl) eingesetzt. Die Proteinkonzentration sowie die Esterase- bzw. Lipaseaktivität in den einzelnen gesammelten Fraktionen wurden mittels Bradford- und Esterase- bzw. Lipase-Assay nachgewiesen.

### Anionenaustauschchromatographie (IEX)

Sowohl die mittels fraktionierter Ammoniumsulfatfällung erhaltenen Proteine als auch die direkt eingesetzten, konzentrierten und umgepufferten Kulturüberstände wurden einer Proteinaufreinigung mittels FPLC-IEX unterzogen (Tabelle 1). Für die anfänglichen Versuche wurden Tris-HCl-Puffer verwendet, insbesondere zur Gewinnung der Enzympräparate für die Käseherstellung wurden Kaliumphosphatpuffer eingesetzt.

**Tabelle 1: Standardparameter für die Proteinreinigung mittels Ionenaustauschchromatographie**

| **Ionenaustauschchromatographie** | |
|---|---|
| **FPLC** | NGC Chromatographie System |
| **Säule** | XK 26 (GE Healthcare Life Sciences, Freiburg) |
| **Säulenmaterial** | DEAE-FF (Diethylaminoethyl Sepharose *Fast Flow*) |
| **Säulenvolumen** | 20 mL/175 mL/140 mL (neu gepackte Säule) |
| **Startpuffer (A)** | 50 mM Tris-HCl-Puffer pH 7,0 bzw. |
| | 50 mM Kaliumphosphatpuffer pH 7,0 |
| **Elutionsspuffer (B)** | 50 mM Tris-HCl-Puffer mit 1 M NaCl, pH 7,0 bzw. |
| | 50 mM Kaliumphosphatpuffer mit 1 M NaCl, pH 7,0 |
| **Flussrate** | 2 - 4 mL min⁻¹ |
| **Programm** | Probenaufgabe |
| | Elution: |
| | 1 SV: 100% A, 0% B |
| | 2 SV: 100% A bis 0% A, 0% B bis 100% B |
| | 1 SV: 0% A, 100% B |
| | 2 SV: 100% A, 0% B |
| **Detektion** | UV-Detektor |
| **Wellenlänge** | 280 nm |
| **Proben** | Kulturüberstand (nach Ammoniumusulfatfällung, konzentriert und auf den Startpuffer umgepuffert) |
| **Probenaufgabe** | über Pumpe A (Position 4) |
| **Probenvolumen** | 10 mL bzw. 90 mL |
| **Fraktionsanzahl** | 55 bzw. 24 |
| **Fraktionsgröße** | 30 mL |

### Größenausschlusschromatographie (SEC)

Die vereinigten und konzentrierten IEX-Fraktionen wurden mittels FPLC-SEC weiter gereinigt (Tabelle 2).

**Tabelle 2: Standardparameter für die Proteinreinigung mittels FPLC-SEC (SV: Säulenvolumen)**

| **Größenausschlusschromatographie** | |
|---|---|
| **FPLC** | Biologic Duo Flow |
| **Säule** | HiLoad 16/60 Superdex 200 pg (GE Healthcare Life Sciences, Freiburg) |
| **Säulenmaterial** | quervernetzte Agarose + Dextran |
| **Säulenvolumen** | 24 mL bzw. 120 mL |
| **Elutionspuffer** | 50 mM Kaliumphosphatpuffer mit 0,15 M NaCl, pH 7,0 |
| **Flussrate** | 0,8 mL min⁻¹ |
| **Programm** | Elution: 2 SV |
| **Detektion** | UV-Detektor |
| **Wellenlänge** | 280 nm |
| **Proben** | aktivste Fraktionen der 1. Reinigungsstufe (konzentriert und auf den Startpuffer umgepuffert) |
| **Probenaufgabe** | 100 µL bzw. 1 mL-Probenschleife |
| **Probenvolumen** | 100 µL - 1 mL (gesamtes Probenkonzentrat) |
| **Fraktionsanzahl** | 38 bzw. 62 |
| **Fraktionsgröße** | 1 mL bzw. 4 mL |

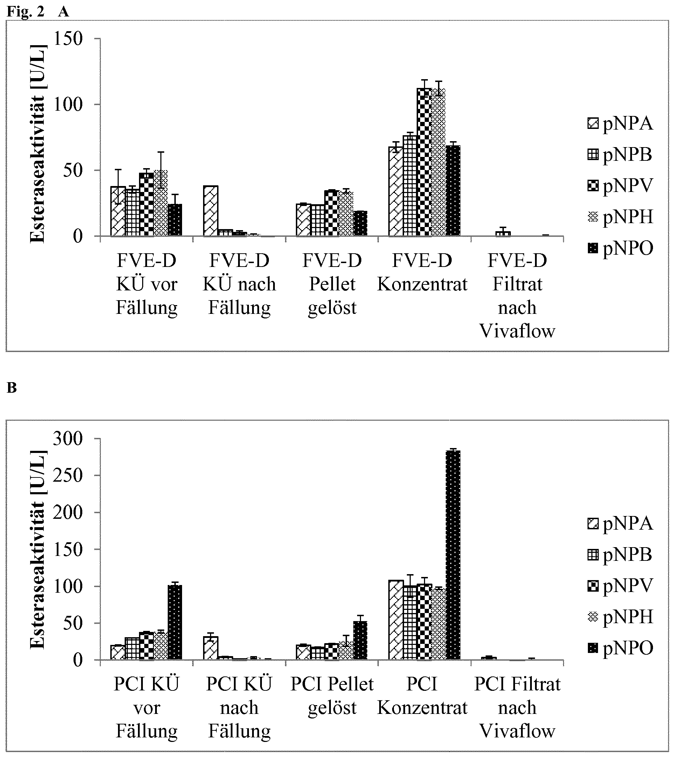

Die Esteraseaktivität im Kulturüberstand wurde mit der Esteraseaktivität in dem hergestellten Lipase - Konzentrat beim Einsatz in der Käseherstellung verglichen. Durch den erfindungsgemäßen Prozess, konnte die Esteraseaktivität im Lipasekonzentrat im Vergleich zur Aktivität im Kulturüberstand erheblich gesteigert werden (Fig. 2).

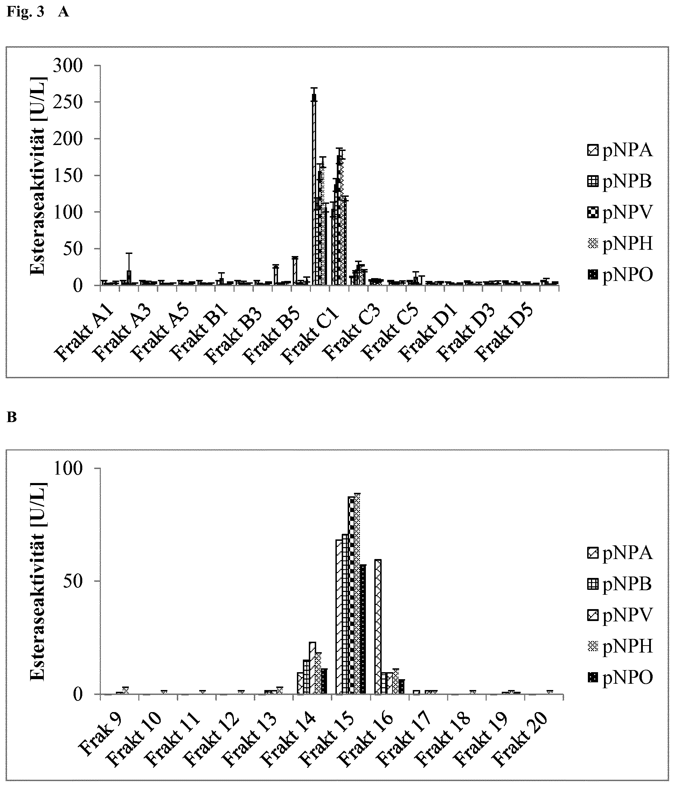

Außerdem wurde die Esteraseaktivität in einzelnen Fraktionen nach der ersten Aufreinigungsstufe mittels schwachem Anionenaustauscher sowie nach der zweiten Aufreinigungsstufe mittels SEC bestimmt. Signifikante Esteraseaktivität wurde bei *Flammulina velutipes* in Fraktion C1 nach der ersten Aufreinigungsstufe (AEX) und in den Fraktionen 14-16 nach der zweiten Aufreinigungsstufe (SEC) detektiert (Fig. 3). Signifikante Esteraseaktivität wurde bei *Pleurotus citrinopileatus* in den Fraktionen B6-C5 nach der ersten Aufreinigungsstufe (AEX) und in den Fraktionen 10-13 nach der zweiten Aufreinigungsstufe (SEC) detektiert (Fig. 5).

### Beispiel 4: Elektrophoretische Methoden

Fraktionen von *Flammulina velutipes* und *Pleurotus citrinopileatus* nach Aufreinigung mit FPLC wurden zur Charakterisierung der Esterasen/Lipasen mittels halbnativer und denaturierender SDS-PAGE analysiert (Fig. 4/6).

### Probenvorbereitung

Zum Konzentrieren, Entsalzen und Umpuffern der FPLC-Fraktionen wurden diese zunächst mit Hilfe von Amicon Ultra-0,5-Centrifugal Filter Devices 10K nach den Angaben des Herstellers konzentriert und umgepuffert.

### Natriumdodecylsufat-Polyacrylamid-Gelelektrophorese (SDS-PAGE)

Zur SDS-PAGE wurden Gele bestehend aus Sammel- und Trenngel gegossen (Tabelle 3). Die Acrylamid-Konzentration betrug im Sammelgel 6% und im Trenngel 12%. Gele der halbnativen und denaturierenden SDS-PAGE unterschieden sich in der Zusammensetzung von Lower Tris- und Upper Tris-Puffer.

**Tabelle 3a: Zusammensetzung des Sammelgels und Trenngels**

| **Chemikalie** | **Sammelgel (6%)** | **Trenngel (12%)** |
|---|---|---|
| H₂O | 1,8 mL | 2,7 mL |
| Upper Tris (pH=6,8) | 750 µL | - |
| Lower Tris (pH=8,8) | - | 1,5 mL |
| Rotiphoerese® Gel 40 | 450 µL | 1,8 mL |
| APS | 10 µL | 15 µL |
| TEMED | 4 µL | 7,5 µL |

### Denaturierende SDS-PAGE

15 µL Probe wurden vor der Auftragung mit 5 µL eines denaturierenden Probenauftragspuffer und 3 µL einer 1 M DTT-Lösung versetzt und für 10 min im siedenden Wasserbad denaturiert. Anschließend wurden die Proben auf Eis abgekühlt und in die Geltaschen pipettiert. Als Marker wurden 10 µL des "PageRuler Unstained Protein Ladder" der Firma Life Technologies GmbH verwendet.

### Halbnative SDS-PAGE

Im Gegensatz zur denaturierenden SDS-PAGE wurden die Proben für die halbnative SDS-PAGE nicht in einem siedenden Wasserbad denaturiert, außerdem wurden die Proben nicht mit DTT versetzt und es wurde ein halbnativer Probenauftragspuffer eingesetzt. Die Trennung erfolgte analog zur denaturierenden SDS-PAGE.

**Tabelle 3b: Zusammensetzung des Probenauftragspuffers**

| **Chemikalie** | **Menge (halbnativ)** | **Menge (denaturierend)** |
|---|---|---|
| 1 M Tris-HCl, pH = 6,8 | 1,0 mL | 1,0 mL |
| SDS-Lösung (20%) | 1,0 mL | 2,0 mL |
| Bromphenolblau | 20,0 mg | 20,0 mg |
| Glycerol | 2,2 mL | 2,2 mL |
| Wasser (reinst) | ad 8,0 mL | ad 8,0 mL |

### Gelfärbung

Denaturierende SDS-PAGE-Gele wurden mittels kolloidalem Coomassie bzw. Coomassie-Färbelösung gefärbt. Halbnative SDS-PAGE-Gele und IEF-Gele wurde in zwei Teile geteilt, um sowohl eine Färbung mit kolloidalem Coomassie bzw. Coomassie-Färbelösung als auch eine Esteraseaktivitätsfärbung durchführen zu können.

### Färbung mit kolloidalem Coomassie

Zur Färbung der Proteinbanden wurde das Gel in eine kolloidale Coomassie-Färbelösung gelegt. Während SDS-Gele über Nacht auf dem Orbitalschüttler inkubiert wurden, war zur Färbung der IEF-Gele eine Inkubation von 30 min ausreichend.

### Esteraseaktivitätsfärbung

Für die Aktivitätsfärbung wurden zwei Färbelösungen benötigt, welche getrennt voneinander hergestellt und auf Eis gelagert wurden (Tabelle 4). Das Gel wurde zunächst in Lösung 1 gelegt und sofort mit Lösung 2 überdeckt. Anschließend folgte die Färbung für maximal 30 min auf einem Orbitalschüttler bei 20 rpm. Um jegliche Reste der Färbereagenzien zu entfernen, wurden die Gele vor der Dokumentation in Wasser (reinst) gelegt.

**Tabelle 4: Lösungen zur Esteraseaktivitätsfärbung**

| | **Substanz** | **Menge** |
|---|---|---|
| Lösung 1 | *Fast Blue RR* | 50 mg in 100 mL Kaliumphosphatpuffer (80 mM, pH7,0) |
| Lösung 2 | *α*-Naphthylbutyrat | 10 mg in 1 mL Aceton |

### Beispiel 5: Sequenzierung der Proteinfraktionen 14-16 der FPLC

Die aus dem Kulturüberstand des Basidiomyceten *Flammulina velutipes* mittels FPLC gereinigten Fraktionen 14-16 mit detektierter Esteraseaktivität (Fig. 3) wurden nach Verdau mit Trypsin mittels LC-ESI-MS/MS) sequenziert.

In Tabelle 5 sind die gefundenen Peptidfragmente der einzelnen Fraktionen aufgeführt.

**Tabelle 5: Gefundene Peptidfragmente der LC-ESI-MS/MS-Analyse der einzelnen Fraktionen**

| Peptid Fragment | Fraktion 14 | Fraktion 15 | Fraktion 16 |
|---|---|---|---|
| AAIDEAEFVWTPR (SEQ ID NO: 3) | - | x | x |
| TGCSNASDTLACLR (SEQ ID NO: 4) | - | x | x |
| EAGVGNLGLQDQR (SEQ ID NO: 5) | - | x | x |
| TADFDTLK (SEQ ID NO: 6) | - | - | x |
| YVGAFGGDPTK(SEQ ID NO: 7) | - | x | x |
| FDGALFSDLPQNLILQGK(SEQ ID NO: 8) | - | x | x |
| | - | x | - |
| FVATLDPNGNTGISWPK(SEQ ID NO: 10) | - | x | - |
| SAALLGDLLFQTSR(SEQ ID NO: 11) | - | x | - |
| YLINELSGK(SEQ ID NO: 12) | - | x | - |
| WLPTASDAEIDR(SEQ ID NO: 13) | - | x | - |

Der Datenbankvergleich ergab Übereinstimmungen mit einer *Putative carotenoid ester lipase* aus Flammulina velutipes (UniProt Zugriffsnummer G8A515). Die Peptidsequenz dieser *Putative carotenoid ester lipase* aus *Flammulina velutipes* ist in Fig. 7 dargestellt (SEQ ID NO: 1), dabei sind die gefundenen Peptidfragmente der LC-ESI-MS/MS-Analyse unterstrichen und fettgedruckt dargestellt.

### Beispiel 6: Käseherstellung

Insgesamt wurden jeweils bis zu sechs verschiedene Testkäse der Käsesorte Salzlakenkäse vom Typ Käse griechischer Art hergestellt. Dazu wurde zur Herstellung von Käsereimilch frische Vollmilch (Stich Feinkäserei GmbH, frische Vollmilch, 3,5% Fett, pasteurisiert, homogenisiert) mit Sahne auf einen Fettgehalt von 4,2% eingestellt und ein definiertes Volumen in Versuchswannen überführt und auf 33 °C temperiert.

Daraufhin erfolgte die Zugabe der Milchsäurebakterien-Kultur (mesophile Direktstarterkultur vom Typ Lyofast M036L, Sacco Srl.), sowie die Zugabe der entsprechenden Lipase. Anschließend begann die Vorreifezeit für insgesamt 45 min. Nach Ablauf der Vorreifezeit wurden versetzt in Zeitabständen von 5 min Calcium (opti-calc, optiferm GmbH) und Lab (Mikrolab: opti-lase, optiferm GmbH) zu den einzelnen Versuchswannen hinzugefügt. Darauf folgten die Gerinnungszeit sowie die Dickungszeit. Als Referenz diente eine Produktion ohne Zugabe von Lipasen ("blank") und je ein Standard mit 0,1 g Ziegenlipase opti-zym z10uc (entsprechend einer durchschnittlichen Praxisdosierung von 3,5 g auf 100 L Milch) und mit 0,1 g Piccantase® KLC (DSM Nutritional Products GmbH), einer kommerziell erhältlichen rekombinanten Kälberlipase.

Nach der Dicklegung der Milch folgte das Schneiden der Gallerte mit Käseharfen in ca. Haselnuss-große Bruchstücke. Der Bruch wurde in regelmäßigen Abständen mit der Hand verzogen und nach dem Austritt der Molke in entsprechende, vorgewärmte Formen überführt. Die Formen wurden zum gleichmäßigen Austreten der Molke in regelmäßigen Abständen gewendet. Anschließend erfolgte das Einlegen der Käse in ein Salzbad (20%ig, pH 5,2 eingestellt mit 80% Milchsäure) sowie das Abtropfen. Nach 24 h wurden die Proben geviertelt und in Folie eingeschweißt. Die Reifezeit betrug 30 d bei 13 °C, anschließend wurden die Proben für weitere 12 Wochen bei 4 °C gelagert.

**Tabelle 10: Übersicht der Verfahrensschritte bei der Feta-Herstellung im Technikumsmaßstab**

| **Zeitablauf** | **Verfahrensschritt** | **Prozessparameter** | **Richtwert** |
|---|---|---|---|
| | Wärmetausch | Milch temperieren | 33°C |
| | Vereinigen, Mischen | Zugabe: Starterkultur Lyofast M 036 L, optional Lipase (z.B. opti-zym z10uc oder Test-Lipase), CaCl₂ | 1 UC/100 L |
| | | | 3,5 g/100 L |
| | | | 1:10.000 |
| | Verweilen | Vorreifen | 45 min |
| 0 min | Vereinigen, Mischen | Zugabe: Mikrolab | 220 IMCU |
| | | | 17 mL/100 L |
| 16 min | Verfestigung | Gerinnungszeit | |
| 45 min | Verfestigung | Labgerinnung | |
| 45 min | Zerkleinern | Schneiden der Gallerte in Würfel | Kantenlänge 20 - 30 mm |
| 50 min/ 60 min | Umschichten | Verziehen der Bruch-Würfel | im 10 min Takt |
| 70 min/ 80 min | | | |
| 90 min | Vereinigen, Abtrennen | Wasserzugabe Schöpfen Abfüllen der Bruch-Würfel in Formen | 1 L mit 48°C |
| 10 min/ 60 min | Formgebung Wenden | Absitzenlassen Zusammenwachsen des Bruchs | |
| 120 min/ 240 min | | | |
| 24 h | Abtropfen | Oberflächenabtrocknung | über Nacht |
| Tag 2 | Stoffaustausch | Salzbad | 50 min |
| | | | 20°Baumé |
| | | | 15°C |
| Tag 2 | Abtropfen | Oberflächenabtrocknung | |
| Tag 2 | Verpacken | Vakuumverpacken | |
| 30 Tage | Proteolyse, Lipolyse, Lagerung | Reifen | bei 10 - 15°C |

Über den Reifungs- und Lagerungszeitraum hinweg wurden die generierten Käsespezialitäten jeweils im Vergleich zu den Referenzprodukten ohne Zugabe von Lipasen, mit Ziegenlipase opti-zym z10uc und mit der rekombinanten Kälberlipase Piccantase® KLC (DSM Nutritional Products GmbH) sensorisch beurteilt.

Begleitend erfolgt eine umfassende instrumentell-analytische Charakterisierung der durch die Lipasen freigesetzten Fettsäuren. Die produzierten Käse wurden mittels Festphasenmikroextraktion (SPME) in Kopplung mit der gaschromatographischen Analyse mit massenspektrometrischer Detektion auf die Anwesenheit von freien Fettsäuren hin untersucht.

### Beispiel 7: Sensorische Beurteilung der hergestellten Testkäse

Nach einer Reifung von 30 Tagen bei 10 - 15 °C fand jeweils durch 3-10 Personen (Mitarbeiter der Firma optiferm GmbH und des Instituts für Lebensmittelchemie und -biotechnologie der JLU Gießen) eine umfassende optische und sensorische Beurteilung der hergestellten Proben, jeweils im Vergleich mit den Referenzprodukten, statt. Im Anschluss wurden die Proben bei 4 °C eingelagert und erneut nach zusätzlichen 4, 8 und 12 Wochen Lagerung verkostet.

Die wahrgenommenen sensorischen Eindrücke wurden in Aussehen (Farbe), Geruch, Geschmack und Textur (Konsistenz) unterteilt.

Der Referenzkäse ohne Lipase wurde über die Dauer der Verkostungen insgesamt als geschmacklich neutral, rein und fehlerfrei bewertet.

Die mit opti-zym z10uc hergestellten Testkäse entwickelten den typischen Geruch und Geschmack nach Ziegenlipase vergleichbar mit dem pikanten Aroma eines Parmesans.

Die Piccantase®-Proben schnitten grundsätzlich schlechter ab als die mit opti-zym z10uc hergestellten Proben. Zwar entwickelten die mit Piccantase® hergestellten Proben ein dezentes, an Ziegenlipase erinnerndes Aroma, allerdings sehr viel weniger intensiv und über die Dauer weniger stabil. Umso länger die Lagerung bei 4°C andauerte, umso mehr bildete sich ein fehlerhafter Beigeschmack (leicht bitter/seifig) aus.

Die mit Lipasen aus *Flammulina velutipes* herstellten Testkäse wiesen einen neutralen bis leicht säuerlichen Geruch auf. Der Geschmack wurde als (leicht) würzig bewertet.

Die mit Lipasen aus *Pleurotus citrinopileatus* hergestellten Feta-Proben entwickelten einen ausgeprägten, intensiv würzigen Geruch, der sich mit zunehmender Reifedauer noch verstärkte. Dieser Geruch wurde als intensiv und den mit Ziegenlipase hergestellten Proben sehr ähnlich empfunden. Dieser würzig-pikante, mit dem von Ziegenlipase erzeugten Aroma vergleichbare Geruch der Proben spiegelte sich auch im Ergebnis der Fettsäure-Analyse wider (Fig 9). Geschmacklich wurden die *Pleurotus citrinopileatus* Proben ebenfalls als (leicht) würzig und vergleichbar mit den Ziegenlipase-Proben bewertet. Die Textur des Käses veränderte sich während der Lagerung über den Verkostungszeitraum von trocken zu cremig.

### Beispiel 8: Massenspektrometrische Analyse der freien Fettsäuren des Käses mittels SPME-GC-MS/MS

Die hergestellten Testkäse wurden nach unterschiedlichen Lagerperioden mittels Festphasenmikroextraktion (SPME) in Kopplung mit der gaschromatographischen Analyse mit massenspektrometrischer Detektion sowie mittels GC-MS auf die Anwesenheit von freien Fettsäuren untersucht. Die Extraktion wurde mittels einer Divinylbenzen/Polydimethylsiloxan-Faser aus dem Kopfraum des 20-mL Headspace-Vials durchgeführt. Dazu wurden jeweils 3 g Käse in ein 20 mL Headspace-Vial eingewogen und zur SPME-GC-MS/MSUntersuchung eingesetzt. Die Parameter sind in Tabelle 11 dargestellt.

Entsprechende SPME-GC-MS/MS-Chromatogramme sind in den Fig. 9 dargestellt.

Die Menge an den freien Fettsäuren Essigsäure, Buttersäure, Capronsäure, Caprylsäure und Caprinsäure nahem über den Lagerzeitraum zu. Testkäse, die ohne Lipase hergestellt wurden, wiesen im Gegensatz zu den Referenzprodukten mit Ziegenlipase opti-zym z10uc bzw. mit der rekombinantern Kälberlipase Piccantase® KLC nach 12 Wochen Lagerung sehr wenige freie Fettsäuren auf (Fig. 9A-C). Insgesamt waren die Menge und Art der freien Fettsäuren in den mit Lipasen aus *Flammulina velutipes* und *Pleurotus citrinopileatus* hergestellten Testkäse über den Lagerungszeitraum vergleichbar mit den Referenzen mit Piccantase und opti-zym, wobei es aber Unterschiede in den Mengenverhältnissen gab (Fig. 9D/E).

**Tabelle 11: Parameter der SPME-GC-MS/MS zur Analyse der freien Fettsäuren des Käses**

| • | **SPME-GC-MS/MS-O** | | |
|---|---|---|---|
| • | **SPME: Faser** | • | Supelco; DVB/PDMS (divinylbenzene/polydimethylsiloxane) |
| • | **SPME: Temperaturprogramm** | • | 55 °C (10 min); schütteln; 55 °C (40 min) |
| • | **Gaschromatograph** | • | 7890 GC System, Agilent Technologies |
| • | **Injektor** | • | Split/Splitless (ALS), 250 °C mit SPME-Liner |
| • | **Split ratio** | • | 50:1 bzw. ohne |
| • | **Trennsäule** | • | Agilent Technologies J&W Scientific VF-Waxms |
| | | • | 30 m Länge; 250 µm Durchmesser; |
| | | • | 0,25 µm Filmdicke |
| • | **Trägergas** | • | He |
| • | **Fluss** | • | 1,2 mL·min⁻¹ (konstant) |
| • | **Temperaturprogramm** | • | 40 °C (3 min); 5 °C·min⁻¹ auf 240 °C (12 min); insgesamt 55 min |
| • | **Detektor** | • | Agilent 5975 C MSD Triple-Axis Detektor |
| • | **Temperaturen** | • | Ionenquelle: 230 °C |
| | | • | Quadrupol: 150 °C |
| • | **Ionisation** | • | EI 70 eV |
| • | **Massenbereich** | • | Totalionenscan: m/z 33 bis 300 |
| • | **Software** | • | Chemstation E02.00.493 |
| • | **Datenbank** | • | NIST 2008 MS |

### Beispiel 9: Proteincharakterisierung mittels HPLC-ESI-MS/MS

Die drei mittels FPLC gereinigten Fraktionen von *Flammulina velutipes* mit detektierter Esteraseaktivität wurden nach Verdau mit Trypsin mittels LC-MS/MS mit Elektrospray-Ionisation (ESI) sequenziert.

### Proteinverdau aus den Fraktionen der FPLC

Für den Verdau der Proteine wurde die Proteinlösung zunächst mit RapiGest™ SF versetzt (auf 15 µg Protein etwa 10 µL). Die Lösung wurde für 20 min auf 80 °C erhitzt und anschließend auf Raumtemperatur abgekühlt. Daraufhin wurden 5 µL einer 10 mM DTT-Lösung dazugegeben, für 20 min auf 60 °C erhitzt und anschließend wieder auf Raumtemperatur abgekühlt. Im Anschluss wurden 5 µL einer 200 mM Iodacetamid-Lösung zugefügt und für 30 min bei Raumtemperatur unter Lichtausschluss inkubiert. Zuletzt wurden 1,5 µL Trypsin (1 µg µL⁻¹) dazugegeben und bei 37 °C über Nacht inkubiert. Am nächsten Tag wurden die Proteine mittels ZipTip®-Pipettenspitzen gereinigt und konzentriert.

### ZipTip® Pipettenspitzen zum Konzentrieren und Reinigen von Proben für die Massenspektrometrie

Zum Ansäuern der Probe wurde diese mit 1 µL Ameisensäure versetzt. Eine ZipTip®-Pipettenspitze wurde mit 10 µL Acetonitril (100%) benetzt (5-mal). Anschließend wurde die ZipTip®-Pipettenspitze mit 10 µL 0,1%iger TFA-Lösung equilibriert (5-mal). Die Säule wurde beladen: 10 µL der angesäuerten Analytlösung wurden 10-mal aufgezogen und in dasselbe Eppendorf-Cap wieder abgeben. Mit einer 0,1 %igen TFA-Lösung wurden Verunreinigungen von der Säule gespült (3-mal). Der Analyt wurde mit Acetonitril/H₂O (1:1) (1% FA) von der Säule eluiert (3-mal mit 5 µL) und in ein neues Eppendorf-Cap geben. Wiederholung der Prozedur (3mal): Die Pipettenspitze wurde dazu 5-mal mit 10 µL Acetonitril/H₂O (1:1) und 5-mal mit Acetonitril (100%) gespült und der Vorgang ab dem Equilibrieren der Säule mit 0,1%iger TFA-Lösung fortgeführt.

Die Proben wurden eingefroren und am nächsten Tag mittels Nano-ESI-MS/MS (Q Exactive, m/z 100-2000, R= 140000 @ m/z 200, MS/MS mittels HCD, 1.7 kV Spannung) analysiert.

### Primerableitung

Anhand der zuvor sequenzierten Aminosäuresequenz wurde die daraus erhaltene cDNA-Sequenz der möglichen Lipase aus *F. velutipes* mit der Sequenz einer *Putative carotinoide ester lipase* aus *F. velutipes* verglichen. Aus diesen Daten wurden Primer zur Amplifizierung abgeleitet. Durch erhaltene Sequenzabschnitte wurden weitere Primer zur vollständigen Sequenzierung der gDNA abgeleitet.

### Isolierung genomischer DNA

Am Tag der maximalen Esterase- bzw- Lipaseaktivität wurden die Kulturen geerntet und das Myzel vom Überstand getrennt. Anschließend wurde das Myzel unter flüssigem Stickstoff gemörsert und ca. 4 Microspatel des gemörserten Myzels in ein 1,5 mL-Reaktionsgefäß überführt. Der Rest des Myzels wurde bei -20 °C eingefroren. In das Reaktionsgefäß wurden 500 µL eines Lysispuffers (Tabelle 12) pipettiert, gevortext und 10 min bei Raumtemperatur inkubiert.

**Tabelle 12 Zusammensetzung des Lysispuffers zur Isolierung genomischer DNA**

| **Chemikalie** | **Stocklösung** | **Eingesetztes Volumen [mL]** |
|---|---|---|
| 400 mM Tris HCl pH 8.0 | 1M | 4 mL |
| 60 mM EDTA pH 8,0 | 200 mM | 3 mL |
| 150 mM NaCl | 1M | 1,5 mL |
| 1% SDS | 10% | 1 mL |
| steriles Reinstwasser | / | 0,5 mL |

Anschließend wurden 150 µL einer 3 M Kaliumacetat-Lösung (pH 4,8) zugefügt, gevortext und für 10 min bei 14.000 rpm (18.000 g) bei Raumtemperatur zentrifugiert. Der Überstand wurde in ein neues 1,5 mL-Reaktionsgefäß überführt und mit dem gleichen Volumen Isopropanol (ca. 600 µL) versetzt und gemischt. Das Gemisch wurde erneut für 10 min bei Raumtemperatur und 14.000 rpm (18.000 g) zentrifugiert. Anschließend wurde der Überstand verworfen und das Pellet in 500 µL Ethanol (70%) aufgenommen, gewaschen und 1 min zentrifugiert (14.000 rpm, 18.000 g, RT). Der Überstand wurde erneut verworfen und das Pellet in einer Vakuumzentrifuge für 5 min vom restlichen Lösungsmittel befreit. Das getrocknete Pellet wurde anschließend in 50 µL bzw. 100 µL (bei größeren, sichtbaren Pellets) sterilem Reinstwasser resuspendiert. Mittels NanoPhotometer™ wurde die DNA-Konzentration bestimmt. Die Lagerung der genomischen DNA erfolgte bis zur weiteren Verwendung bei -21 °C.

### Polymerasekettenreaktion (PCR)

Zur Amplifizierung gewünschter gDNA-Abschnitte wurde die PCR eingesezt. Als Polymerasen wurde die Phusion®-Polymerase (New England, Biolabs, Ipswich, USA) verwendet. Die Zusammensetzung des Master-Mixes (Tabelle 13) sowie das Temperaturprogramm (Tabelle 14) richteten sich nach den Angaben des Herstellers der Polymerase.

**Tabelle 13 Zusammensetzung des Master-Mixes pro 20 µL PCR-Ansatz mit Phusion® High-Fidelity DNA-Polymerase**

| **Komponente** | **Volumen [µL]** | **Endkonzentration** |
|---|---|---|
| 5x GC Reaktionspuffer | 4,0 | 1x |
| 10 mM dNTPs | 0,4 | 200,0 µM |
| 10 µM Forward Primer | 1,0 | 0,5 µM |
| 10 µM Reverse Primer | 1,0 | 0,5 µM |
| Phusion® High-Fidelity DNA-Polymerase | 0,2 | 0,02 U µL⁻¹ |
| Template DNA | variabel | 50 - 250 ng pro 20,0 µL PCR |
| DMSO, 100% (optional) | 0,6 | 3% |
| Magnesiumchlorid, 50 mM (optional) | 0,6 | 1,5 mM |
| Nuklease-freies Reinstwasser | *ad* 20 | |

### Analytische PCR

Um die optimale Hybridisierungstemperatur der abgeleiteten Primer zu erhalten, wurde ein Temperaturgradient durchgeführt. Dabei wurde bei 5 °C unter der vom Hersteller angegebenen Schmelztemperatur der Primer angesetzt. Die Zusammensetzung ist analog zu Tabelle 13, allerdings wurden 10 µL statt 20 µL angesetzt.

**Tabelle 14 Temperaturprogramm einer PCR-Reaktion mit Phusion® High-Fidelity DNA-Polymerase**

| **Schritt-Nr.** | **Schritt** | **Temperatur [°C]** | **Zeit** |
|---|---|---|---|
| 1 | Initiale Denaturierungsphase | 98 | 5,0 min |
| 2 | Denaturierung | 98 | 30 s |
| 3 | Primer Annealing | Gradient: 45 °C bis 69 °C | 30 s |
| 4 | Elongation | 72 | 10 - 30 s pro kb |

| **Zurück zu Schritt Nr. 2 für 30-40 Zyklen** | | | |
|---|---|---|---|
| 5 | Finale Elongation | 72 | 5 min |
| 6 | Lagerung | 8 | ∞ |

### Präparative PCR

Für die präparative PCR wurden 200 µL des Mastermixes angesetzt, um größere Mengen an DNA zu erhalten. Die PCR-Produkte wurden nach der Isolierung der entsprechenden Bande aus dem Agarosegel aufgearbeitet und sequenziert.

### Agarose-Gelelektrophorese

Nach Beendigung der PCR wurden die erhaltenen Produkte mittels Agarosegel-Elektrophorese aufgetrennt. Die Konzentration des Gels war dabei von der Größe der zu trennenden DNA-Fragmente abhängig. Fragmente > 2 kb wurden in 1 - 1,5%-igen Gelen und < 2 kb wurden in 1,5 - 3%-igen Gelen aufgetrennt. In Tabelle ist die Zusammensetzung des für die Elektrophorese eingesetzten 50x TAE-Puffers aufgeführt.

**Tabelle 15 Zusammensetzung des 50-fachen TAE-Puffers**

| **Komponente** | **Konzentration** |
|---|---|
| Tris-Base | 242,0 g L⁻¹ |
| 0,5 M EDTA, pH 8 | 100,0 mL L⁻¹ |
| Essigsäure | 57,1 mL L⁻¹ |

Vor der Verwendung wurde der Puffer 1:50 mit Reinstwasser verdünnt (1x TAE-Puffer). Die entsprechende Menge Agarose wurde eingewogen und in 1x TEA-Puffer suspendiert. Für kleine Gele wurden 56 mL und für große Gele 168 mL benötigt. Die Suspension wurde in der Mikrowelle bis zum vollständigen Lösen der Agarose erhitzt. Anschließend wurde die Lösung auf einem Rührer gerührt und auf ca. 60 °C abgekühlt, um sie dann in einen Gelschlitten zu gießen. Nach dem Gießen wurde ein Kamm eingesetzt. Nach ca. 30 Minuten war das Gel ausgehärtet und konnte mit 1x TAE-Puffer überschichtet werden. Die Proben der analytischen PCR wurden mit 1 µL Midori Green Direct versetzt und direkt auf das Gel aufgetragen. Bei den Proben der präparativen PCR wurde nur eine Probe mit dem Farbstoff, alle anderen wurden ohne Farbstoff, dafür 1:10 mit 10x DNA-Ladepuffer (Tabelle) versetzt, aufgetragen und anhand der gefärbten Fragmente die entsprechende Bande ausgeschnitten.

**Tabelle 16 10x DNA-Ladepuffer**

| **Komponente** | **Menge** |
|---|---|
| Bromphenolblau | 25 mg |
| EDTA 0,5 M | 200 µL |
| Glycerol | 3,5 mL |
| SDS 10% | 500 µL |
| Xylencyanol | 25 mg |
| Reinstwasser | ad 10 mL |

Abhängig von der Gelgröße wurde für die Elektrophorese eine Spannung zwischen 80 und 120 V angelegt. Mit Hilfe eines Größenstandards (100 bp DNA extended DNA-Leiter für PCR-Amplifikate; 1 kbp DNA-Leiter für Restriktionsverdau, Carl Roth) konnten die Größen der DNA-Fragmente abgeschätzt werden. Die Gele wurden mittels der Anlage DeVision DBOX (Decon Science Tec., Hohengandern), ausgestattet mit einem UV-Transilluminator (312 nm), einer Kamera und der Software DeVision G Vers. 2.0 betrachtet und dokumentiert.

### Isolierung von DNA-Fragmenten

Die relevanten DNA-Fragmente wurden mit einem Skalpell aus dem Gel ausgeschnitten und in ein steriles 2 mL-Reaktionsgefäß überführt. Die Aufreinigung der Fragmente aus dem Gel erfolgte mittels NucleoSpin® Gel und PCR Clean-up Kit (Macherey-Nagel) nach den Angaben des Herstellers. Die Konzentrationsbestimmung der DNA-haltigen Lösungen erfolgte am NanoPhotometer™. Die Lagerung der isolierten DNA erfolgte bis zur weiteren Verwendung bei -21 °C.

### DNA-Sequenzierung

Die Sequenzierung der isolierten DNA-Fragmente erfolgte mittels Sequenzierservice von SeqLab-Microsynth GmbH, Göttingen.

### Literaturverzeichnis

Kilcawley, K.N; Wilkinson, M.G; Fox, P.F (2002): Determination of key enzyme activities in commercial peptidase and lipase preparations from microbial or animal sources. In: Enzyme and Microbial Technology 31 (3), S. 310-320. DOI: 10.1016/S0141-0229(02)00136-9.
Matissek, Reinhard; Steiner, Gabriele; Fischer, Markus (2014): Lebensmittelanalytik. Berlin, Heidelberg: Springer Berlin Heidelberg.
Purdy, R. E.; Kolattukudy, P. E. (1973): Depolymerization of a hydroxy fatty acid biopolymer, cutin, by an extracellular enzyme from Fusarium solani f. pisi. Isolation and some properties of the enzyme. In: Archives of Biochemistry and Biophysics 159 (1), S. 61-69. DOI: 10.1016/0003-9861(73)90429-3.
Winkler, U. K.; Stuckmann, M. (1979): Glycogen, hyaluronate, and some other polysaccharides greatly enhance the formation of exolipase by Serratia marcescens. In: Journal of bacteriology 138 (3), S. 663-670.

## Patentansprüche

1. Verwendung einer von einem Basidiomyceten abgeleiteten isolierten Lipase zur Herstellung von Käse.

2. Verfahren zur Herstellung von Käse, umfassend das Einwirken einer von einem Basidiomyceten abgeleiteten isolierten Lipase auf ein Vorprodukt der Käseherstellung, bevorzugt auf Milch.

3. Verwendung nach Anspruch 1 oder Verfahren nach Anspruch 2, wobei der Käse ein Weichkäse, halbfester Schnittkäse, Schnittkäse oder Hartkäse ist,
wobei der Käse bevorzugt ein Salzlakenkäse, z.B. Feta, ist.

4. Verwendung nach Anspruch 1 oder 3 oder Verfahren nach Anspruch 2 oder 3, wobei der Basidiomycet ausgewählt ist aus der Gruppe umfassend *Flammulina spp., Pleurotus spp., Agrocybe spp., Armillaria spp., Auricularia spp., Clitocybe spp., Fistulina spp., Hericium spp., Hypholoma spp., Hypsizygus spp., Kuehneromyces spp., Laetiporus spp., Lactarius spp., Lentinula spp., Lentinus spp., Lycoperdon spp., Macrolepiota spp., Phallus spp., Piptoporus spp., Panellus spp., oder Polyporus spp.,*
bevorzugt ausgewählt aus der Gruppe umfassend *Flammulina velutipes, Pleurotus citrinopileatus, Agrocybe aegerita, Armillaria bulbosa, Armillaria gallica, Armillaria melea, Auricularia fuscosuccinea, Clitocybe geotropa, Fistulina hepatica, Hericium erinaceus, Hericium cirrhatum, Hericium coralloides, Hypholoma capnoides, Hypsizygus tessulatus, Kuehneromyces mutabilis, Laetiporus sulphureus, Lactarius deliciosus, Lentinula edodes, Lentinus squarrolusus, Lycoperdon pyriforme, Macrolepiota procera, Phallus impudicus, Piptoporus betulinus, Pleurotus eryngii, Pleurotus flabellatus, Pleurotus ostreatus, Panellus serotinus, oder Polyporus umbellatus,*
am meisten bevorzugt *Flammulina velutipes* oder *Pleurotus citrinopileatus.*

5. Verwendung nach Anspruch 1 oder 3-4 oder Verfahren nach Anspruch 2-4, wobei die Lipase aus einer Basidiomyceten-Kultur isoliert ist.

6. Verwendung nach Anspruch 1 oder 3-4 oder Verfahren nach Anspruch 2-4, wobei die Lipase unter Verwendung von gentechnisch veränderten Organismen ausgewählt aus der Gruppe umfassend Hefe und Bakterien, hergestellt wurde.

7. Verwendung nach Anspruch 1 oder 3-6 oder Verfahren nach Anspruch 2-6, wobei die Käseherstellung folgende Schritte umfasst:
a) Bereitstellen eines Käsevorprodukts, welches Käsereimilch umfasst,
b) Dicklegen des Käsevorprodukts, wobei Gallerte entsteht,
c) Schneiden der Gallerte,
d) Formen,
e) Salzen, und
f) Reifen,
wobei man ein Vorprodukt der Käseherstellung in einem der Schritte a, b, c oder d mit einer von einem Basidiomyceten abgeleiteten Lipase in Kontakt bringt, bevorzugt in Schritt b.

8. Verwendung nach Anspruch 1 oder 3-7 oder Verfahren nach Anspruch 2-7, wobei die Lipase bei der Käseherstellung ein Aroma erzeugt,
wobei das Aroma bevorzugt charakterisiert ist durch das Vorhandensein der freien Fettsäuren Essigsäure, Buttersäure, Capronsäure, Caprylsäure und Caprinsäure.

9. Verwendung nach Anspruch 1 oder 3-8 oder Verfahren nach Anspruch 2-8, wobei die Lipase in einer Endkonzentration von 70 -285 U/L bezogen auf Caprylat in 3 L Käsevorprodukt zugegeben wird.

10. Verwendung nach Anspruch 1 oder 3-9 oder Verfahren nach Anspruch 2-9,
wobei der Käse mit Milch ausgewählt aus der Gruppe umfassend Kuhmilch, Schafsmilch, Ziegenmilch, Büffelmilch und einer pflanzlichen Milch wie Sojamilch hergestellt wird und/oder
wobei die Milch einen Fettgehalt von mindestens 1,7 % (v/v), bevorzugt von mindestens 3,5 % (v/v) hat.

11. Verwendung nach Anspruch 1 oder 3-10 oder Verfahren nach Anspruch 2-10, wobei die Lipase herstellbar ist durch ein Verfahren zur Herstellung einer von einem Basidiomyceten abgeleiteten Lipase aus einer Basidiomyceten-Kultur, das die folgenden Schritte umfasst:
i. Kultur eines Basidiomyceten in einem Medium, bevorzugt Malzextraktpepton-Medium, umfassend einen Induktor zur Steigerung der Sekretion von Lipasen
ii. Isolierung des die Lipasen umfassenden Kulturüberstandes,
iii. Proteinfällung,
iv. Konzentrierung, und
v. Reinigung der Lipase,
wobei Schritte iii.-v. in jeder Reihenfolge oder gleichzeitig durchgeführt werden können.

12. Von einem Basidiomyceten, bevorzugt *Pleurotus citrinopileatus* oder *Flammulina velutipes,* abgeleitete isolierte Lipase, die in der Lage ist, die freien Fettsäuren Essigsäure, Buttersäure, Capronsäure, Caprylsäure und Caprinsäure aus Triglyceriden freizusetzen

13. Lipase nach Anspruch 12, welche eine Aminosäuresequenz umfasst, die mindestens 80% Identität mit einer Sequenz von SEQ ID NO:2 aufweist,
wobei die Lipase von einem Basidiomyceten abgeleitet ist, z.B. aus *Flammulina velutipes,* wobei die Lipase nicht SEQ ID NO: 1 aufweist oder i) an eine Aminosäuresequenz gekoppelt ist, die die Aufreinigung erleichtert und/oder ii) in gentechnisch veränderten Bakterien oder Hefen hergestellt wurde;
wobei, bevorzugt, die Lipase mindestens 98% Sequenzidentität mit SEQ ID NO: 14 aufweist oder ein Fragment von mindestens 30 kDa eines Proteins ist, welches mindestens 98% Sequenzidentität mit SEQ ID NO: 14 aufweist, und/oder mindestens 99,5% Sequenzidentität zu SEQ ID NO: 17 aufweist.

14. Expressionsvektor, der eine Lipase nach Anspruch 13 kodiert oder einen solchen Expressionsvektor umfassende transformierte Wirtszelle, wobei die Wirtszelle ausgewählt ist aus der Gruppe umfassend Bakterien und Hefe.

15. Verwendung nach Anspruch 1 oder 3-10 oder Verfahren nach Anspruch 2-10, wobei die Lipase herstellbar ist durch ein Verfahren zur Herstellung einer von Basidiomyceten abgeleiteten Lipase, das die folgenden Schritte umfasst:
i. Kultivieren der Wirtszelle nach Anspruch 14, und
ii. Isolieren der Lipase aus der Kultur.

16. Verfahren zur Herstellung eines Molkeprodukts ausgewählt aus der Gruppe um fassend Molke, Lactose oder Molkeprotein, bei dem eine von einem Basidiomyceten abgeleitete Lipase nach einem der Ansprüche 12 oder 13, zur Herstellung von Käse verwendet und die Molke abgetrennt wird.

17. Käse, der freie Fettsäuren aus der Gruppe bestehend aus Capronsäure, Caprylsäure, Caprinsäure, Essigsäure und Buttersäure und eine von einem Basidiomyceten abgeleitete Lipase nach einem der Ansprüche 12 oder 13, umfasst, optional erhältlich durch ein Verfahren nach einem der Ansprüche 2-10.

## Claims

1. Use of an isolated lipase derived from a basidiomycete for the preparation of cheese.

2. Method for the preparation of cheese, comprising action of an isolated lipase derived from a basidiomycete on a pre-product of cheese preparation, preferably, on milk.

3. The use of claim 1 or method of claim 2, wherein the cheese is soft cheese, semi-soft cheese, semi-hard cheese or hard cheese,
wherein the cheese preferably is brine cheese, e.g., feta cheese.

4. The use of claim 1 or 3 or method of claim 2 or 3, wherein the basidiomycete is selected from the group comprising *Flammulina spp., Pleurotus spp., Agrocybe spp., Armillaria spp., Auricularia spp., Clitocybe spp., Fistulina spp., Hericium spp., Hypholoma spp., Hypsizygus spp., Kuehneromyces spp., Laetiporus spp., Lactarius spp., Lentinula spp., Lentinus spp., Lycoperdon spp., Macrolepiota spp., Phallus spp., Piptoporus spp., Panellus spp., or Polyporus spp.,*
preferably selected from the group comprising *Flammulina velutipes, Pleurotus citrinopileatus, Agrocybe aegerita, Armillaria bulbosa, Armillaria gallica, Armillaria melea, Auricularia fuscosuccinea, Clitocybe geotropa, Fistulina hepatica, Hericium erinaceus, Hericium cirrhatum, Hericium coralloides, Hypholoma capnoides, Hypsizygus tessulatus, Kuehneromyces mutabilis, Laetiporus sulphureus, Lactarius deliciosus, Lentinula edodes, Lentinus squarrolusus, Lycoperdon pyriforme, Macrolepiota procera, Phallus impudicus, Piptoporus betulinus, Pleurotus eryngii, Pleurotus flabellatus, Pleurotus ostreatus, Panellus serotinus, or Polyporus umbellatus,*
most preferably, *Flammulina velutipes* or *Pleurotus citrinopileatus.*

5. The use of claim 1 or 3-4 or method of claim 2-4, wherein the lipase is isolated from a basidiomycete culture.

6. The use of claim 1 or 3-4 or method of claim 2-4, wherein the lipase was prepared using recombinant organisms selected from the group comprising yeast and bacteria.

7. The use of claim 1 or 3-6 or method of claim 2-6, wherein the preparation of cheese comprises the following steps of
a) providing a cheese pre-product comprising cheese-making milk,
b) coagulating the cheese pre-product, wherein curd is produced,
c) cutting the curd,
d) forming,
e) salting, and
f) ripening,
wherein a pre-product of cheese preparation is contacted with a lipase derived from a basidiomycete in any of steps a, b, c or d, preferably, in step b.

8. The use of claim 1 or 3-7 or method of claim 2-7, wherein, during the preparation of cheese, the lipase produces a flavour,
wherein the flavour is preferably **characterised by** the presence of the free fatty acids acetic acid, butanoic acid, caproic acid, caprylic acid and capric acid.

9. The use of claim 1 or 3-8 or method of claim 2-8, wherein the lipase is added in a final concentration of 70-285 U/L in respect to caprylate in 3 L cheese pre-product.

10. The use of claim 1 or 3-9 or method of claim 2-9,
wherein the cheese is produced with milk selected from the group comprising cow milk, sheep milk, goat milk, buffalo milk and a plant milk such as soy milk and/or
wherein the milk has a fat content of at least 1.7 % (v/v), preferably, at least 3.5 % (v/v).

11. The use of claim 1 or 3-10 or method of claim 2-10, wherein the lipase is obtainable from a method for preparing a lipase derived from a basidiomycete from a basidiomycete culture comprising steps of:
i. culturing a basidiomycete in a medium, preferably malt extract peptone medium comprising an inducer for increasing the secretion of lipases
ii. isolating the culture supernatant comprising the lipases,
iii. precipitating proteins,
iv. concentrating, and
v. purifying the lipase,
wherein steps iii.-v. can be carried out in any sequence or simultaneously.

12. An isolated lipase derived from a basidiomycete, preferably, *Pleurotus citrinopileatus* or *Flammulina velutipes,* that is capable of releasing the free fatty acids acetic acid, butanoic acid, caproic acid, caprylic acid und capric acid from triglycerides.

13. The lipase of claim 12 comprising an amino acid sequence having at least 80% identity with a sequence of SEQ ID NO:2,
wherein the lipase is derived from a basidiomycete, e.g., from *Flammulina velutipes,*
wherein the lipase does not have SEQ ID NO: 1 or i) is coupled to an amino acid sequence facilitating purification and/or ii) was produced in recombinant bacteria or yeast;
wherein, preferably, the lipase has at least 98% sequence identity to SEQ ID NO: 14 or is a fragment of at least 30 kDa of a protein having at least 98% sequence identity to SEQ ID NO: 14, and/or at least 99,5% sequence identity to SEQ ID NO: 17.

14. An expression vector encoding a lipase of claim 13 or a transformed host cell comprising said expression vector, wherein the host cell is selected from the group comprising bacteria and yeast.

15. The use of claim 1 or 3-10 or method of claim 2-10, wherein the lipase is obtainable from a method for preparing a lipase derived from basidiomycetes comprising the following steps of:
i. cultivating the host cell of claim 14, and
ii. isolating the lipase from the culture.

16. A method for preparing a whey product selected from the group comprising whey, lactose or whey protein, wherein a lipase derived from a basidiomycete of any of claims 12 or 13 is used for the preparation of cheese, and the whey is separated.

17. Cheese comprising free fatty acids from the group consisting of caproic acid, caprylic acid, capric acid, acetic acid and butanoic acid and a lipase derived from a basidiomycete of any of claims 12 or 13, optionally obtainable from a method of any of claims 2-10.

## Revendications

1. Utilisation d'une lipase isolée, dérivée d'un basidiomycète, pour la fabrication de fromage.

2. Procédé de fabrication de fromage, comprenant le fait de faire agir une lipase isolée, dérivée d'un basidiomycète, sur un produit de base pour fabrication de fromage, et de préférence sur du lait.

3. Utilisation conforme à la revendication 1, ou procédé conforme à la revendication 2, le fromage étant un fromage à pâte molle, un fromage à trancher à pâte mi-dure, un fromage à trancher ou un fromage à pâte dure, et de préférence, un fromage en saumure, par exemple de la féta.

4. Utilisation conforme à la revendication 1 ou 3, ou procédé conforme à la revendication 2 ou 3, pour laquelle ou dans lequel le basidiomycète est choisi dans l'ensemble comprenant *Flammulina spp., Pleurotus spp., Agrocybe spp., Armillaria spp., Auricularia spp., Clitocybe spp., Fistulina spp., Hericium spp., Hypholoma spp., Hypsizygus spp., Kuehneromyces spp., Laetiporus spp., Lactarius spp., Lentinula spp., Lentinus spp., Lycoperdon spp., Macrolepiota spp., Phallus spp., Piptoporus spp., Panellus spp.,* et *Polyporus spp.,*
et de préférence choisi dans l'ensemble comprenant les suivants : *Flammulina velutipes, Pleurotus citrinopileatus, Agrocybe aegerita, Armillaria bulbosa, Armillaria gallica, Armillaria melea, Auricularia fuscosuccinea, Clitocybe geotropa, Fistulina hepatica, Hericium erinaceus, Hericium cirrhatum, Hericium coralloides, Hypholoma capnoides, Hypsizygus tessulatus, Kuehneromyces mutabilis, Laetiporus sulphureus, Lactarius deliciosus, Lentinula edodes, Lentinus squarrolusus, Lycoperdon pyriforme, Macrolepiota procera, Phallus impudicus, Piptoporus betulinus, Pleurotus eryngii, Pleurotus flabellatus, Pleurotus ostreatus, Panellus serotinus,* et *Polyporus umbellatus,*
la plus grande préférence étant accordée à *Flammulina velutipes* ou *Pleurotus citrinopileatus.*

5. Utilisation conforme à l'une des revendications 1 et 3 à 4, ou procédé conforme à l'une des revendications 2 à 4, pour laquelle ou lequel la lipase est isolée à partir d'une culture de basidiomycète.

6. Utilisation conforme à l'une des revendications 1 et 3 à 4, ou procédé conforme à l'une des revendications 2 à 4, pour laquelle ou lequel la lipase a été préparée au moyen d'organismes, modifiés par génie génétique, choisis dans l'ensemble comprenant les levures et les bactéries.

7. Utilisation conforme à l'une des revendications 1 et 3 à 6, ou procédé conforme à l'une des revendications 2 à 6, dans laquelle ou lequel la fabrication de fromage comporte les étapes suivantes :
a) préparation d'un produit de base pour fromage qui comprend du lait de fromagerie,
b) caillage du produit de base pour fromage, au cours de quoi il se forme une gelée,
c) découpe de la gelée,
d) moulage,
e) salage,
f) et mûrissage,
étant entendu que c'est au cours de l'une des étapes (a), (b), (c) et (d), et de préférence au cours de l'étape (b), qu'on met le produit de base pour fabrication de fromage en contact avec une lipase dérivée d'un basidiomycète.

8. Utilisation conforme à l'une des revendications 1 et 3 à 7, ou procédé conforme à l'une des revendications 2 à 7, dans laquelle ou lequel la lipase produit un arôme au cours de la fabrication de fromage, lequel arôme est de préférence **caractérisé par** la présence des acides gras acétique, butyrique, caproïque, caprylique et caprique libres.

9. Utilisation conforme à l'une des revendications 1 et 3 à 8, ou procédé conforme à l'une des revendications 2 à 8, dans laquelle ou lequel la lipase est ajoutée en une concentration finale de 70 à 285 U/L, par rapport au caprylate dans 3 L de produit de base pour fromage.

10. Utilisation conforme à l'une des revendications 1 et 3 à 9, ou procédé conforme à l'une des revendications 2 à 9, dans laquelle ou lequel
- le fromage est fabriqué avec du lait choisi dans l'ensemble comprenant du lait de vache, du lait de brebis, du lait de chèvre, du lait de bufflone et un lait végétal, comme du lait de soja,
- et/ou le lait présente une teneur en matières grasses d'au moins 1,7 % en volume, et de préférence d'au moins 3,5 % en volume.

11. Utilisation conforme à l'une des revendications 1 et 3 à 10, ou procédé conforme à l'une des revendications 2 à 10, pour laquelle ou lequel la lipase peut être préparée par un procédé de préparation d'une lipase dérivée d'un basidiomycète à partir d'une culture de basidiomycète, lequel procédé comporte les étapes suivantes :
i) culture d'un basidiomycète dans un milieu, de préférence un milieu contenant de la peptone et de l'extrait de malt et comprenant un inducteur servant à augmenter la quantité de lipases sécrétée,
ii) isolement du surnageant de culture, qui contient les lipases,
iii) précipitation des protéines,
iv) concentration,
v) et purification de la lipase,
étant entendu que les étapes (iii) à (v) peuvent être réalisées successivement dans n'importe quel ordre, ou simultanément.

12. Lipase isolée dérivée d'un basidiomycète, de préférence de *Pleurotus citrinopileatus* ou de *Flammulina velutipes,* qui est capable de libérer les acides gras acétique, butyrique, caproïque, caprylique et caprique à partir de triglycérides.

13. Lipase conforme à la revendication 12, qui comprend une séquence d'acides aminés identique, à un degré d'au moins 80 %, à une séquence de la Séquence N° 2,
laquelle lipase est dérivée d'un basidiomycète, par exemple de *Flammulina velutipes,*
laquelle lipase ne présente pas la Séquence N° 1, ou (i) est couplée avec une séquence d'acides aminés qui facilite la purification, et/ou (ii) a été produite au sein de bactéries ou de levures génétiquement modifiées,
étant entendu que, de préférence, la lipase présente une séquence qui est, à 98 % au moins, identique à la Séquence N° 14, ou est un fragment d'au moins 30 kDa d'une protéine présentant une séquence identique, à 98 % au moins, à la Séquence N° 14, et/ou présente une séquence qui est identique, à 99,5 % au moins, à la Séquence N° 17.

14. Vecteur d'expression qui code une lipase conforme à la revendication 13, ou cellule hôte transformée hébergeant un tel vecteur d'expression, laquelle cellule hôte est choisie dans l'ensemble comprenant les bactéries et les levures.

15. Utilisation conforme à l'une des revendications 1 et 3 à 10, ou procédé conforme à l'une des revendications 2 à 10, pour laquelle ou lequel la lipase peut être préparée par un procédé de production d'une lipase dérivée de basidiomycètes qui comporte les étapes suivantes :
i) cultiver une cellule hôte conforme à la revendication 14,
ii) et isoler la lipase à partir de la culture.

16. Procédé de production d'un produit laitier choisi dans l'ensemble comprenant petit-lait, lactose et protéines de petit-lait, dans lequel on utilise une lipase dérivée d'un basidiomycète, conforme à l'une des revendications 12 et 13, pour fabriquer du fromage, et l'on sépare le petit-lait.

17. Fromage, comprenant des acides gras libres de l'ensemble formé par les acides caproïque, caprylique, caprique, acétique et butyrique ainsi qu'une lipase dérivée d'un basidiomycète, conforme à l'une des revendications 12 et 13, et en option, accessible par un procédé conforme à l'une des revendications 2 à 10.
